(19) **Europäisches Patentamt / European Patent Office / Office européen des brevets**

(11) **EP 4 543 028 A1**

(12) **EUROPEAN PATENT APPLICATION**
published in accordance with Art. 153(4) EPC

(43) Date of publication:
23.04.2025 Bulletin 2025/17

(21) Application number: 23893339.4

(22) Date of filing: 01.09.2023

(51) International Patent Classification (IPC):
*H04N 21/8549* (2011.01)

(52) Cooperative Patent Classification (CPC):
H04N 21/4402; H04N 21/8549

(86) International application number:
PCT/CN2023/116462

(87) International publication number:
WO 2024/109246 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2022 CN 202211466668

(71) Applicant: Honor Device Co., Ltd.
Shenzhen, Guangdong 518040 (CN)

(72) Inventors:
• LIU, Mengmeng
Shenzhen, Guangdong 518040 (CN)
• GENG, Xu
Shenzhen, Guangdong 518040 (CN)

(74) Representative: Thun, Clemens
Mitscherlich PartmbB
Patent- und Rechtsanwälte
Karlstraße 7
80333 München (DE)

(54) **POLICY DETERMINATION METHOD FOR GENERATING VIDEO, AND ELECTRONIC DEVICE**

(57) This application relates to the field of video processing, and provides a policy determining method for generating a video and an electronic device. First duration, second duration, and a video analysis rate are obtained, a target analysis policy corresponding to a candidate video is determined, based on the first duration, the second duration, and the video analysis rate, from an analysis policy set, analysis processing is performed on a to-be-selected video based on the target analysis policy, to obtain analysis results of to-be-selected videos, and finally, a target video is generated based on the analysis results of the plurality of to-be-selected videos. In other words, through video duration of the candidate video, analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all frame images in the candidate video in the related art, thereby improving user experience.

Obtain first duration, second duration, and a video analysis rate — S401

Determine, based on the first duration, the second duration, and the video analysis rate, a target analysis policy corresponding to a candidate video from an analysis policy set — S402

Perform analysis processing on the candidate video based on the target analysis policy, to obtain an analysis result of the candidate video — S403

Obtain a target video based on the analysis result of the candidate video — S404

FIG. 21

EP 4 543 028 A1

**Description**

This application claims priority to Chinese Patent Application No. 202211466668.6, filed with the China National Intellectual Property Administration on November 22, 2022 and entitled "POLICY DETERMINING METHOD FOR GENERATING VIDEO AND ELECTRONIC DEVICE", which is incorporated herein by reference in its entirety.

**TECHNICAL FIELD**

This application relates to the field of videos, and specifically, to a policy determining method for generating a video and an electronic device.

**BACKGROUND**

In some electronic devices, a "one-tap blockbuster" function is provided for a user. After the user taps a "one-tap blockbuster" control, the electronic device automatically selects highlight clips of various videos and/or pictures from a plurality of videos and/or pictures selected by the user, and automatically generates a new video based on the selected highlight clips.

In a process of obtaining a highlight clip of a candidate video, frame images in the video are usually analyzed, to obtain an analysis result of each frame image, and then a new video is automatically generated based on the analysis result of each frame image. However, usually, there are a large quantity of frame images in the video, and a time period required to analyze the frame images in the video is usually long, resulting in poor user experience.

Based on this, how to reduce analysis duration of the frame images in the video and improve the user experience has become a problem that urgently needs to be resolved.

**SUMMARY**

This application provides a policy determining method for generating a video and an electronic device, to improve user experience when a one-tap blockbuster is performed.

According to a first aspect, a policy determining method for generating a video is provided, where the method is applied to an electronic device, and the method includes:

> obtaining first duration, second duration, and a video analysis rate, where the first duration is video duration of a candidate video, and the second duration indicates analysis duration allocated to the candidate video to perform analysis processing;
> determining, based on the first duration, the second duration, and the video analysis rate, a target analysis policy corresponding to the candidate video from an analysis policy set, where the analysis policy set includes at least two analysis policies, and duration required for performing analysis processing on the candidate video by using different analysis policies is different;
> performing analysis processing on the candidate video based on the target analysis policy, to obtain an analysis result of the candidate video; and
> obtaining a target video based on the analysis result of the candidate video.

It should be understood that, different analysis policies of the at least two analysis policies are to select all or some frame images from the candidate video to perform analysis processing. Therefore, analysis processing performed on the candidate video by using the at least two analysis policies takes shorter duration than analysis processing performed on all the frame images in the candidate video in the conventional method.

In embodiments of this application, the first duration, the second duration, and the video analysis rate are obtained, the target analysis policy corresponding to the candidate video is determined, based on the first duration, the second duration, and the video analysis rate, from the analysis policy set, analysis processing is performed on a to-be-selected video based on the target analysis policy, to obtain analysis results of to-be-selected videos, and finally, the target video is generated based on the analysis results of the plurality of to-be-selected videos. The first duration is video duration of the candidate video, and the second duration indicates analysis duration allocated to the candidate video to perform analysis processing on the candidate video. The analysis policy set includes at least two analysis policies, and duration required for performing analysis processing on the candidate video by using different analysis policies is different. In other words, through the video duration of the candidate video, the analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all the frame images in the candidate video in the related art. Therefore, the analysis result of the candidate video can be obtained faster, and the target video can be obtained faster, thereby improving user experience.

Further, because the second duration is the analysis duration allocated to the candidate video to perform analysis processing, this means that the electronic device determines, in advance, analysis duration corresponding to each candidate video based on user acceptable waiting duration (namely, waiting duration that does not deteriorate the user experience). In this way, total analysis duration required for each candidate video to perform analysis processing based on the allocated analysis duration does not exceed the user acceptable waiting duration, which does not lead to poor user experience due to excessively long waiting duration, thereby improving the user experience in a process of one-tap blockbuster.

With reference to the first aspect, in an embodiment of the first aspect, the determining, based on the first duration, the second duration, and the video analysis rate, a target analysis policy corresponding to the candidate video from an analysis policy set includes:

determining a first ratio based on the first duration, the second duration, and the video analysis rate, where the first ratio indicates a percentage of a frame image that completes analysis processing in the candidate video within the second duration to all frame images in the candidate video; and determining the target analysis policy based on the first ratio.

With reference to the first aspect, in an embodiment of the first aspect, the determining, based on the first duration, the second duration, and the video analysis rate, a target analysis policy corresponding to the candidate video from an analysis policy set includes:

determining third duration based on the first duration and the video analysis rate, where the third duration indicates duration required for completing analysis processing on all frame images in the candidate video; and determining the target analysis policy corresponding to the candidate video based on the third duration and the second duration.

With reference to the first aspect, in an embodiment of the first aspect, the at least two analysis policies include a full analysis policy, an intensive key clip analysis policy, a sparse key frequency analysis policy, and an I frame sampling analysis policy.

Different analysis policies are used to perform analysis processing on the same candidate video. Duration used by using the full analysis policy is the longest, duration used by using the intensive key clip analysis policy is the second longest, duration used by using the sparse key clip analysis policy is the third longest, and duration used by using the I frame sampling analysis policy is the shortest.

With reference to the first aspect, in an embodiment of the first aspect, the full analysis policy is a policy of performing analysis processing on a frame image of each frame in the candidate video.

It should be understood that, because the full analysis policy is a policy of performing analysis processing on the frame image of each frame in the candidate video, the duration occupied for performing analysis processing on the candidate video by using the full analysis policy is the longest.

With reference to the first aspect, in an embodiment of the first aspect, the intensive key clip analysis policy is a policy of dividing the candidate video into N analysis clips with same interval duration, and performing analysis processing on the N analysis clips, where N is a positive integer greater than 0.

Compared with the sparse key clip analysis policy, the intensive key clip analysis policy is used to divide the candidate video into N analysis clips with the same duration, and interval duration between two adjacent analysis clips is the same.

It should be understood that, compared with a case that the full analysis policy is used to perform decoding, resolution reduction, and scoring on all video frames, the intensive key clip analysis policy only needs to be used to perform decoding, resolution reduction, and scoring on video frames of several key clips. Therefore, duration occupied by performing analysis processing on the candidate video by using the intensive key clip analysis policy is shorter than duration occupied by performing analysis processing on the candidate video by using the full analysis policy.

With reference to the first aspect, in an embodiment of the first aspect, the sparse key clip analysis policy is a policy of dividing a candidate video into N analysis clips and performing analysis processing on the N analysis clips, where interval duration between the N analysis clips is different.

It should be understood that the sparse key clip analysis policy has the following two characteristics:

1. A first analysis clip may not be a first frame of a video. For example, the first analysis clip needs to select one frame from a first video frame at a start point of the first video, a video frame at a position of a $2^{nd}$ second in the first video, and a video frame at a position of 1/5 of the first video as the first frame of the first analysis clip.
2. Interval duration between analysis clips is different in the sparse key clip analysis policy. As duration of the candidate video increases, the interval duration between two analysis clips becomes longer.

For example, the sparse key clip analysis policy is used to divide the candidate video into four analysis clips, which are respectively an analysis clip 1, an analysis clip 2, an analysis clip 3, and an analysis clip 4 in a chronological order. Interval duration between the analysis clip 1 and the analysis clip 2 is 1s, interval duration between the analysis clip 2 and the analysis clip 3 is 2s, and interval duration between the analysis clip 3 and the analysis clip 4 is 4s.

It should be understood that, compared with the intensive key clip analysis policy, the sparse key clip analysis policy focuses on analyzing a front or middle clip of a video, and a start point of the first analysis clip may not be the first video frame. Therefore, time consumed by the sparse key clip analysis policy may be shorter.

With reference to the first aspect, in an embodiment of the first aspect, the I frame sampling analysis policy is a policy of selecting M frames of images from the candidate video as start frames of analysis clips, to obtain M analysis clips, and selecting one of the M analysis clips as a highlight clip, where M is a positive integer greater than 0.

With reference to the first aspect, in an embodiment of the first aspect, the method further includes: displaying a first interface, where the first interface includes a first control, and the first control is configured to generate the target video; displaying a second interface in response to a first operation on the first control, where the second interface is configured to display a plurality of videos and/or pictures; and determining the candidate video in response to a second operation on the second interface, where the second operation is configured for selecting the candidate video from the plurality of videos and/or pictures.

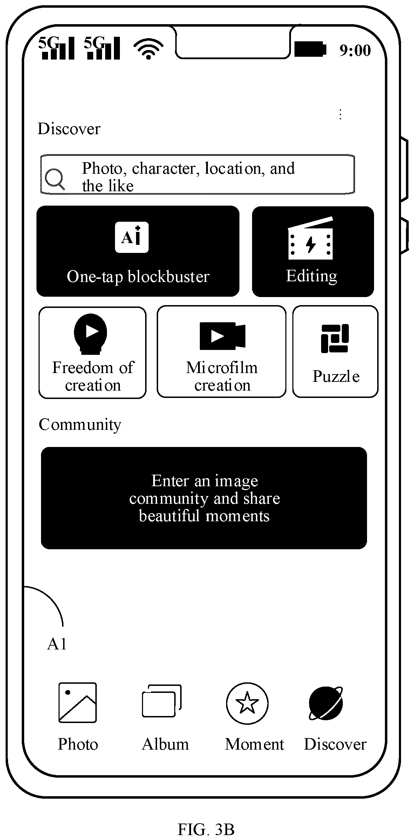

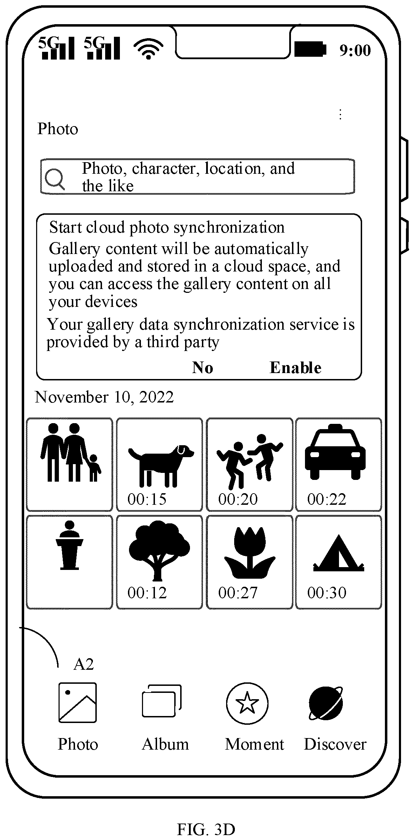

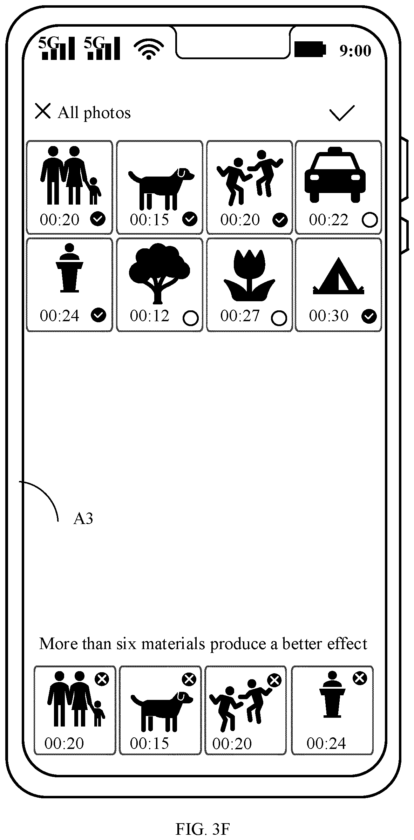

It should be understood that, the first interface may be an interface shown in FIG. 3B, and the first control may be a "one-tap blockbuster" control shown in FIG. 3B. After the user taps the "one-tap blockbuster" control, in response to the tap operation by the user, a second interface (an interface A2) shown in FIG. 3D is displayed. A plurality of videos and/or pictures are displayed on the second interface. The second operation may be a selection operation by the user on the second interface, to select a candidate video and/or a picture on which a one-tap blockbuster function is to be performed from the second interface. The second interface may also be an A3 interface as shown in FIG. 3F.

According to a second aspect, a policy determining method for generating a video is provided, the method is applied to an electronic device, and the electronic device includes: a policy monitoring module, an algorithm module, and a basic capability layer, where the policy monitoring module is respectively connected to the algorithm module and the basic capability layer, and the method includes:

the policy monitoring module, configured to obtain first duration, second duration, and a video analysis rate, where the first duration is video duration of a candidate video, and the second duration indicates analysis duration allocated to the candidate video to perform analysis processing;

the policy monitoring module, configured to determine, based on the first duration, the second duration, and the video analysis rate, a target analysis policy corresponding to the candidate video from an analysis policy set, where the analysis policy set includes at least two analysis policies, and duration required for performing analysis processing on the candidate video by using different analysis policies is different;

the algorithm module, configured to perform analysis processing on the candidate video based on the target analysis policy, to obtain an analysis result of the candidate video; and

the basic capability layer, configured to obtain a target video based on the analysis result of the candidate video.

It should be understood that, different analysis policies of the at least two analysis policies are to select all or some frame images from the candidate video to perform analysis processing. Therefore, analysis processing performed on the candidate video by using the at least two analysis policies takes shorter duration than analysis processing performed on all the frame images in the candidate video in the conventional method.

In embodiments of this application, the policy monitoring module obtains the first duration, the second duration, and the video analysis rate, and determines the target analysis policy corresponding to the candidate video, based on the first duration, the second duration, and the video analysis rate, from the analysis policy set, so that the algorithm module performs analysis processing on a to-be-selected video based on the target analysis policy, to obtain analysis results of to-be-selected videos, and finally, the basic capability layer generates the target video based on the analysis results of the plurality of to-be-selected videos. The first duration is video duration of the candidate video, and the second duration indicates analysis duration allocated to the candidate video to perform analysis processing on the candidate video. The analysis policy set includes at least two analysis policies, and duration required for performing analysis processing on the candidate video by using different analysis policies is different. In other words, through the video duration of the candidate video, the analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all the frame images in the candidate video in the related art. Therefore, the analysis result of the candidate video can be obtained faster, and the target video can be obtained faster, thereby improving user experience.

With reference to the second aspect, in an embodiment of the second aspect, the policy monitoring module is configured to determine a first ratio based on the first duration, the second duration, and the video analysis rate, where the first ratio indicates a percentage of a frame image that completes analysis processing in the candidate video within the second duration to all frame images in the candidate video; and determine the target analysis policy based on the first ratio.

With reference to the second aspect, in an embodiment of the second aspect, the policy monitoring module is configured to determine third duration based on the first duration and the video analysis rate, where the third duration indicates duration required for completing analysis processing on all frame images in the candidate video; and determine the target analysis policy corresponding to the candidate video based on the third duration and the second duration.

With reference to the second aspect, in an embodiment of the second aspect, the at least two analysis policies include a full analysis policy, an intensive key clip analysis policy, a sparse key frequency analysis policy, and an I frame sampling analysis policy.

Different analysis policies are used to perform analysis processing on the same candidate video. Duration used by using the full analysis policy is the longest, duration used by using the intensive key clip analysis policy is the second longest, duration used by using the sparse key clip analysis policy is the third longest, and duration used by using the I frame sampling analysis policy is the shortest.

With reference to the second aspect, in an embodiment of the second aspect, the full analysis policy is a policy of performing analysis processing on a frame image of each frame in the candidate video.

It should be understood that, because the full analysis policy is a policy of performing analysis processing on a frame image of each frame in the candidate video, the duration occupied for performing analysis processing on the candidate video by using the full analysis policy is the longest.

With reference to the second aspect, in an embodiment of the second aspect, the intensive key clip analysis policy is a policy of dividing the candidate video into N analysis clips with same interval duration, and performing analysis processing on the N analysis clips, where N is a positive integer greater than 0.

It should be understood that, compared with a case that the full analysis policy is used to perform decoding, resolution reduction, and scoring on all video frames, the intensive key clip analysis policy only needs to be used to perform decoding, resolution reduction, and scoring on video frames of several key clips. Therefore, duration occupied by performing analysis processing on the candidate video by using the intensive key clip analysis policy is shorter than duration occupied by performing analysis processing on the candidate video by using the full analysis policy.

With reference to the second aspect, in an embodiment of the second aspect, the sparse key clip analysis policy is a policy of dividing the candidate video into N analysis clips and performing analysis processing on the N analysis clips, where interval duration between the N analysis clips is different.

It should be understood that, compared with the intensive key clip analysis policy, the sparse key clip analysis policy focuses on analyzing a front or middle clip of a video, and a start point of the first analysis clip may not be the first video frame. Therefore, time consumed by the sparse key clip analysis policy may be shorter

With reference to the second aspect, in an embodiment of the second aspect, the I frame sampling analysis policy is a policy of selecting M frames of images from the candidate video as start frames of analysis clips, to obtain M analysis clips, and selecting one of the M analysis clips as a highlight clip, where M is a positive integer greater than 0.

According to a third aspect, an electronic device is provided, including one or more processors and a memory. The memory is coupled to the one or more processors, the memory is configured to store computer program code, the computer program code includes computer instructions, and the one or more processors invoke the computer instructions to enable the electronic device to perform:

According to a fourth aspect, an electronic device is provided, including one or more processors and a memory. The memory is coupled to the one or more processors, the memory is configured to store computer program code, the computer program code includes computer instructions, and the one or more processors invoke the computer instructions to enable the electronic device to perform the policy determining method for generating a video in the first aspect or any implementation in the first aspect.

According to a fifth aspect, a chip system is provided. The chip system is applied to an electronic device, and the chip system includes one or more processors, where the processors are configured to invoke computer instructions to enable the electronic device to perform the policy determining method for generating a video in the first aspect or any implementation in the first aspect.

According to a sixth aspect, a computer-readable storage medium is provided. The computer-readable storage medium stores computer program code. When the computer program code is run by an electronic device, the electronic device is enabled to perform the policy determining method for generating a video in the first aspect or any implementation in the first aspect.

According to a seventh aspect, a computer program product is provided. The computer program product includes computer program code. When the computer program code is run by an electronic device, the electronic device is enabled to perform the policy determining method for generating a video in the first aspect or any implementation in the first aspect.

According to the policy determining method for generating a video and the electronic device provided in embodiments of this application, the first duration, the second duration, and the video analysis rate are obtained, the target analysis policy corresponding to the candidate video is determined, based on the first duration, the second duration, and the video analysis rate, from the analysis policy set, analysis processing is performed on a to-be-selected video based on the target analysis policy, to obtain analysis results of to-be-selected videos, and finally, the target video is generated based on the analysis results of the plurality of to-be-selected videos. The first duration is video duration of the candidate video, and the second duration indicates analysis duration allocated to the candidate video for performing analysis processing on the candidate video. The analysis policy set includes at least two analysis policies, and duration required for performing analysis processing on the candidate video by using different analysis policies is different. In other words, through the video duration of the candidate video, the analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all the frame images in the candidate video in the related art. Therefore, the analysis result of the candidate video can be obtained faster, and the target video can be obtained faster, thereby improving user experience.

Further, because the second duration is the analysis duration allocated to the candidate video to perform analysis processing, this means that the electronic device determines, in advance, analysis duration corresponding to each candidate video based on user acceptable waiting duration (namely, waiting duration that does not deteriorate the user experience). In this way, total analysis duration required for each candidate video to perform analysis processing based on the allocated analysis duration does not exceed the user acceptable waiting duration, which does not lead to poor user experience due to excessively long waiting duration, thereby improving the user experience in a process of one-tap blockbuster.

**BRIEF DESCRIPTION OF DRAWINGS**

FIG. 1 is a schematic diagram of a hardware system applicable to an electronic device of this application;

FIG. 2 is a schematic diagram of a software system applicable to an electronic device of this application;

FIG. 3A to FIG. 3F are schematic diagrams of an interface for selecting a candidate video according to an embodiment of this application;

FIG. 4 is a schematic diagram of an interface for generating a one-tap blockbuster video according to an embodiment of this application;

FIG. 5 is a schematic diagram of an interface for displaying a one-tap blockbuster video according to an embodiment of this application;

FIG. 6A to FIG. 6D are schematic diagrams of an interface for generating a one-tap blockbuster video according to an embodiment of this application;

FIG. 7 is a schematic flowchart of a policy determining method for generating a video according to an embodiment of this application;

FIG. 8 is a schematic flowchart of a policy determining method for generating a video according to an embodiment of this application;

FIG. 9A to FIG. 9C are schematic flowcharts of a policy determining method for generating a video according to an embodiment of this application;

FIG. 10 is a schematic diagram of duration required for different analysis policies according to an embodiment of this application;

FIG. 11 is a schematic diagram of a middle analysis clip of an intensive key clip analysis policy according to an embodiment of this application;

FIG. 12 is a schematic diagram of different parameters of an intensive key clip analysis policy according to an embodiment of this application;

FIG. 13 is a schematic flowchart of an intensive key clip analysis policy according to an embodiment of this application;

FIG. 14 is a schematic flowchart of a sparse key clip analysis policy according to an embodiment of this application;

FIG. 15 is a schematic diagram of a middle analysis clip of a sparse key clip analysis policy according to an embodiment of this application;

FIG. 16 is a schematic flowchart of a sparse key clip analysis policy according to an embodiment of this application;

FIG. 17 is a schematic diagram of a position of one frame of image in a candidate video in an I frame sampling analysis policy according to an embodiment of this application;

FIG. 18 is a schematic flowchart of a policy determining method for generating a video according to an embodiment of this application;

FIG. 19 is a schematic flowchart of a duration allocation algorithm according to an embodiment of this application;

FIG. 20 is a schematic flowchart of a policy determining method for generating a video according to an embodiment of this application;

FIG. 21 is a schematic flowchart of a policy determining method for generating a video according to an embodiment of this application;

FIG. 22 is a schematic flowchart of a policy determining method for generating a video according to an embodiment of this application; and

FIG. 23 is a schematic diagram of a structure of an electronic device according to an embodiment of this application.

## DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this embodiment, unless otherwise stated, "a plurality of" means two or more.

For ease of understanding of embodiments of this application, first, a brief description of the related concepts involved in embodiments of this application is provided.

1. Highlight clip

The highlight clip is a brilliant clip in a specific video. The highlight clip may be a smiling face clip of user, a winning moment clip, or the like. For example, a game video of a skateboarder is used as an example. A brilliant moment may be a moment at which the skateboarder performs a flipping motion.

2. One-tap blockbuster

In some electronic devices, a "one-tap blockbuster" function is provided for a user. After the user taps on the "one-tap blockbuster" control, the electronic device automatically selects highlight clips of various videos and/or pictures from a plurality of videos and/or pictures selected by the user, and automatically generates a new video based on the selected highlight clips. It should be understood that, a highlight clip of a picture may refer to scoring the picture. When a score of the picture is higher than a preset threshold, the picture may be used as the highlight clip. The highlight clip includes only one frame of picture.

Currently, in some electronic devices, a "one-tap blockbuster" function is provided for a user. After the user taps on the "one-tap blockbuster" control, the electronic device automatically selects highlight clips of various videos and/or pictures from a plurality of videos and/or pictures selected by the user, and automatically generates a new video based on the selected highlight clips. In a process of selecting a highlight clip of a video, frame images in the video are usually analyzed, to obtain an analysis result of each frame image, and then a new video is automatically generated based on the analysis result of each frame image. However, usually, there are a large quantity of frame images in the video, and a time period required to analyze the frame images in the video is usually long, resulting in poor user experience.

In view of this, embodiments of this application provide a policy determining method for generating a video and an electronic device. In embodiments of this application, the first duration, the second duration, and the video analysis rate are obtained, the target analysis policy corresponding to the candidate video is determined, based on the first duration, the second duration, and the video analysis rate, from the analysis policy set, analysis processing is performed on a to-be-selected video based on the target analysis policy, to obtain analysis results of to-be-selected videos, and finally, the target video is generated based on the analysis results of the plurality of to-be-selected videos. The first duration is video duration of the candidate video, and the second duration indicates analysis duration allocated to the candidate video to perform analysis processing on the candidate video. The analysis policy set includes at least two analysis policies, and duration required for performing analysis processing on the candidate video by using different analysis policies is different. In other words, through the video duration of the candidate video, the analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all the frame images in the candidate video in the related art. Therefore, the analysis result of the candidate video can be obtained faster, and the target video can be obtained faster, thereby improving user experience.

Further, because the second duration is the analysis duration allocated to the candidate video to perform analysis processing, this means that the electronic device determines, in advance, analysis duration corresponding to each candidate video based on user acceptable waiting duration (namely, waiting duration that does not deteriorate the user experience). In this way, total analysis duration required for each candidate video to perform analysis processing based on the allocated analysis duration does not exceed the user acceptable waiting duration, which does not lead to poor user experience due to excessively long waiting duration, thereby improving the user experience in a process of one-tap blockbuster.

The following describes a policy determining method for generating a video and an electronic device provided in embodiments of this application with reference to the accompanying drawings.

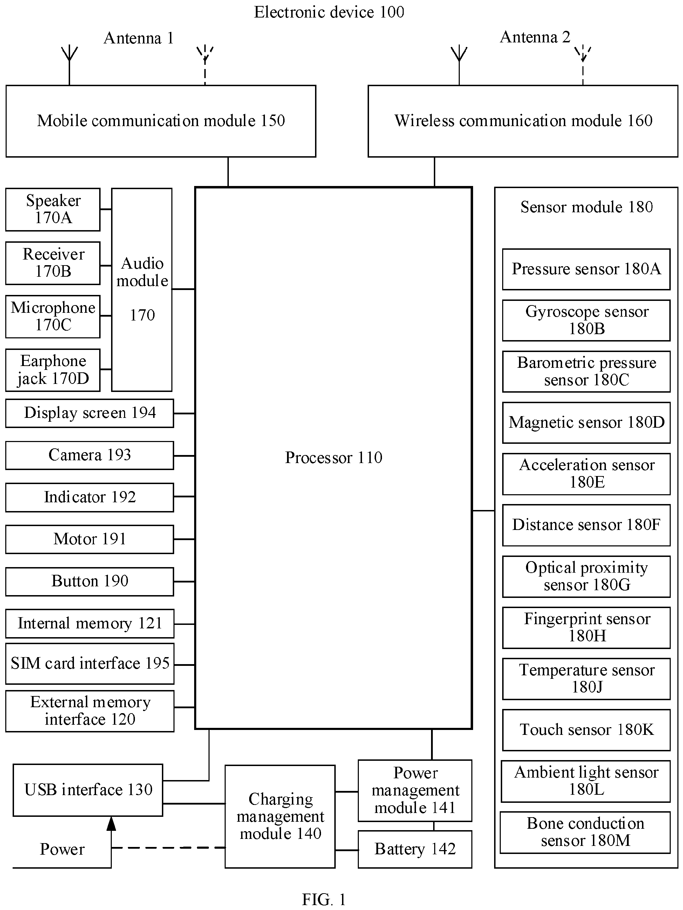

FIG. 1 shows a hardware system applicable to an electronic device of this application.

The electronic device 100 may be a mobile phone, a smart screen, a tablet computer, a wearable electronic device, a vehicle-mounted electronic device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the electronic device 100 is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It should be noted that the structure shown in FIG. 1 does not constitute a specific limitation on the electronic device 100. In some other embodiments of this application, the electronic device 100 may include more or fewer components than the components shown in FIG. 1, the electronic device 100 may include a combination of some of the components shown in FIG. 1, or the electronic device 100 may include subcomponents of some of the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components or integrated components. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and a USB interface.

For example, in embodiments of this application, the processor 110 may be configured to perform the policy determining method for generating a video provided in embodiments of this application. For example, the first duration, the second duration, and the video analysis rate are obtained, the target analysis policy corresponding to the candidate video is determined based on the first duration, the second duration, and the video analysis rate, analysis processing is performed on a to-be-selected video based on the target analysis policy, to obtain analysis results of to-be-selected videos, and finally, the target video is generated based on the analysis results of the plurality of to-be-selected videos.

A connection relationship among the modules shown in FIG. 1 is merely an example for description, and constitutes no limitation on the connection relationship between modules of the electronic device 100. Optionally, a combination of a plurality of connection modes may also be used in each module of the electronic device 100 in the foregoing embodiments.

A wireless communication function of the electronic device 100 may be implemented through components such as the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve antenna utilization. For example, the antenna 1 may be multiplexed as a diversity antenna of a wireless local area network. In some other embodiments, the antennas may be used in combination with a tuning switch.

The electronic device 100 may implement a display function through the GPU, the display screen 194, the application processor, and the like. The GPU is a microprocessor for image processing, and is connected to the display screen 194 and the application processor. The GPU is configured to perform mathematical and geometric calculations and to render graphics. The processor 110 may include one or more GPUs and execute program instructions to generate or change display information.

The display screen 194 may be configured to display an image or a video.

Optionally, the display screen 194 may be configured to display an image or a video. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, Mini LED), a micro light-emitting diode (micro light-emitting diode, Micro LED), a Micro OLED (Micro OLED), or a quantum dot light emitting diode (quantum dot light emitting diode, QLED). In some embodiments, the electronic device 100 may include 1 or N display screens 194. N is a positive integer greater than 1.

For example, in embodiments of this application, the display screen 194 may display a video or a photo selected by a user, and display the processed video.

For example, the electronic device 100 may implement a shooting function through the ISP, the camera 193, the video codec, the GPU, the display screen 194, the application processor, and the like.

For example, the ISP is configured to process data fed back by the camera 193. For example, during photographing, a shutter is enabled. Light is transferred to a photosensitive element of the camera through a camera, and an optical signal is converted into an electrical signal. The photosensitive element of the camera transfers the electrical signal to the ISP for processing, and therefore, the electrical signal is converted into an image visible to a naked eye. The ISP may perform algorithm optimization on noise, brightness, and color of the image. The ISP may further optimize parameters such as exposure and color temperature of the photographing scene. In some embodiments, the ISP may be disposed in the camera 193.

For example, the camera 193 (also referred to as a lens) is configured to capture a static image or a video. The camera 193 may be triggered to turn on through an application instruction, to implement a shooting function, such as obtaining images of any scene by shooting. The camera may include components such as an imaging lens, a filter, an image sensor, and the like. Light emitted or reflected by an object enters the imaging lens, passes through the filter, and finally converges on the image sensor. The imaging lens is mainly configured to collect and image light emitted or reflected by all objects (which may also be referred to as a to-be-photographed scene, a target scene, or a scene image that a user expects to shoot) in a shooting angle, the filter is mainly used to filter out excess light waves in light (such as light waves other than visible light, such as infrared); and the image sensor may be a charge coupled device (charge coupled device, CCD) or a complementary metal-oxide-semiconductor (complementary metal-oxide-semiconductor, CMOS) phototransistor. The image sensor is mainly configured to perform photoelectric conversion on the received optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

For example, the digital signal processor is configured to process a digital signal, and may process another digital signal in addition to the digital image signal. For example, when the electronic device 100 performs frequency selection, the digital signal processor is configured to perform Fourier transform and the like on frequency energy.

For example, the video codec is configured to: compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, MPEG 4, or the like.

For example, the gyroscope sensor 180B may be configured to determine a moving pose of the electronic device 100. In some embodiments, an angular velocity of the electronic device 100 around three axes (namely, x axis, y axis, and z axis) may be determined through the gyroscope sensor 180B. The gyroscope sensor 180B may be used for image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scene and a somatic game scene.

For example, the acceleration sensor 180E may detect an acceleration value of the electronic device 100 in all directions (generally x axis, y axis, and z axis). When the electronic device 100 is still, a magnitude and a direction of gravity may be detected. The acceleration sensor 180E may be further configured to identify a posture of the electronic device 100, and is used as an input parameter in an application such as switching between a landscape mode and a portrait mode or a pedometer.

For example, the distance sensor 180F is configured to measure a distance. The electronic device 100 may measure the distance in an infrared manner or a laser manner. In some embodiments, for example, in a photographing scene, the electronic device 100 may measure a distance through the distance sensor 180F to implement quick focusing.

For example, the ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

For example, the fingerprint sensor 180H is configured to collect a fingerprint. The electronic device 100 may use a feature of the collected fingerprint to implement functions such as unlocking, application lock access, photographing, call answering, and the like.

For example, the touch sensor 180K is also referred to as a "touch component". The touch sensor 180K may be disposed on the display screen 194, and the touch sensor 180K and the display screen 194 constitute a touchscreen, which is also referred to as a "touchscreen". The touch sensor 180K is configured to detect a touch operation performed on or near the touch sensor. The touch sensor 180K may transfer the detected touch operation to the application processor to determine a type of the touch event. A visual output related to the touch operation may be provided through the display screen 194. In some other embodiments, the touch sensor 180K may also be disposed on a surface of the electronic device 100 and disposed at a position different from the display screen 194.

The hardware system of the electronic device 100 is described in detail above, and the software system of the electronic device 100 is introduced below.

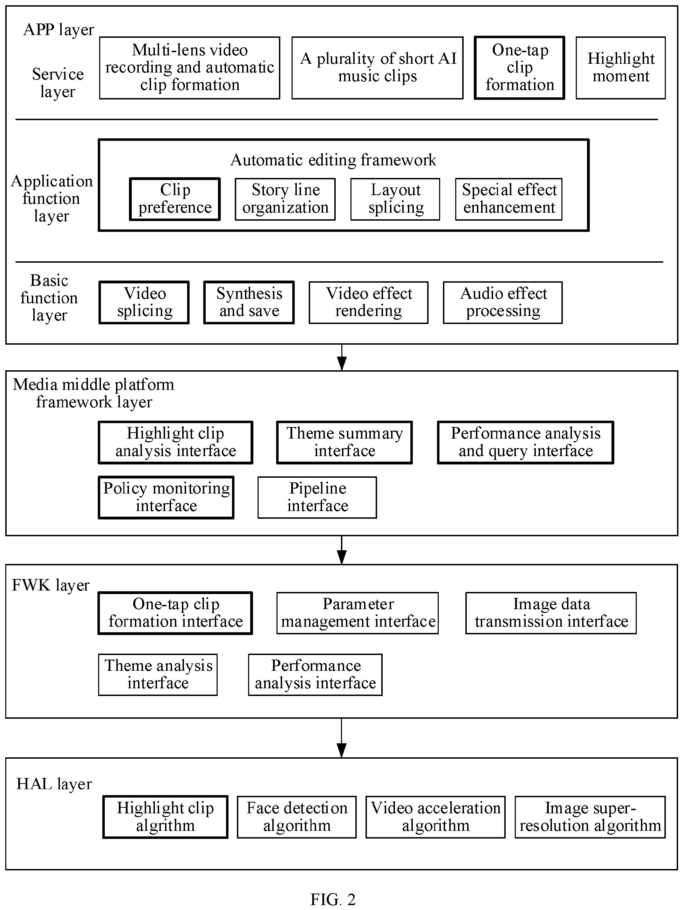

FIG. 2 is a schematic diagram of a software system of an electronic device according to an embodiment of this application.

As shown in FIG. 2, the electronic device can use a layered architecture, so that software is divided into several layers, and each layer has a clear role and task. The layers communicate with each other through a software interface. In some embodiments, software layers of a software structure are sequentially classified from top to bottom into: an application (application, APP) layer, a media middle platform framework layer, an application framework (framework, FWK) layer, and a hardware abstract layer (hardware abstract layer, HAL). In a possible case, the electronic device may refer to a terminal device.

The application layer, referred to as the application layer for short, may include a series of application packages, such as Camera, Gallery, Calendar, Map, and Navigation. When these application packages are run, these application packages can access various service modules provided by the media middle platform framework layer and the application framework layer through an application programming interface (application programming interface, API) and execute corresponding intelligent services.

In some embodiments, the camera is configured to capture photos, videos, slow motion images, panoramic images, and the like in response to a user operation. After these images are captured by the camera, or after a user triggers a mobile phone to capture a picture, or after a user triggers a mobile phone to record a screen, or after the terminal device downloads an image from another device, the terminal device can save these images in the gallery, so that the user can perform a video generation operation, such as a one-tap blockbuster operation, on the images and/or videos in the gallery.

In embodiments of this application, the gallery is sequentially classified from top to bottom into: a service layer, an application function layer, and a basic function layer.

The service layer provides a plurality of services such as multi-lens video recording and automatic clip formation, a plurality of short AI music clips, one-tap clip formation, and a brilliant moment. These services are displayed in a form of controls on a user interface (user interface, UI) interface in the gallery. Through an operation on a specific control, the user can trigger the camera to perform a corresponding video processing action. For example, after the user selects one or more material videos, and taps a 219-one-tap clip formation control in the gallery, the gallery automatically analyzes and extracts highlight clips in the material videos through an algorithm, and combines the highlight clips into one edited video.

The application function layer includes an automatic editing framework. Each service in the service layer may invoke the automatic editing framework, to provide an automatic editing service for a picture and a video. For example, the automatic editing framework may include functional modules such as clip preference, storyline organization, layout splicing, and special effect enhancement. The clip preference is configured for invoking a highlight clip analysis interface and a policy monitoring interface, to extract a highlight clip from the material video. The story line organization is configured for sequentially splicing a plurality of material videos in a form of a story line based on content of the material videos. The layout splicing is configured for modulating an interface layout of the material video. The special effect enhancement is configured for adjusting an enhancement effect of a video, for example, adjusting a picture brightness and enhancing a face of a character.

The basic function layer is configured for performing basic function processing on the edited video clips after the automatic editing framework edits the plurality of material videos. For example, the basic function layer may include basic functional modules such as video splicing, synthesis and saving, video effect rendering, and audio effect processing. The video splicing is configured for splicing a plurality of highlight clips extracted by the user. The synthesis and saving is configured for storing a video set obtained by splicing. The video effect rendering is configured for adding a video effect to the video set obtained by splicing, for example, adding a style filter, a theme, and the like to the video. The audio effect processing is configured for adding a sound effect to the video set obtained by splicing, for example, adding background music.

The media middle platform framework layer is a software layer set between the application layer and the application framework. The media middle platform framework layer may include a performance analysis query interface, a highlight clip analysis interface, a policy monitoring interface, a pipeline (pipeline) interface, and a theme summary interface. The performance analysis query interface is configured to calculate total duration of all material videos based on a video analysis speed. The highlight clip analysis interface is configured to invoke the policy monitoring interface to extract a highlight clip. The policy monitoring interface is configured to separately configure available analysis duration for each material video based on the total duration of all the material videos, and dynamically set an analysis policy for each material video based on parameters such as the available analysis duration and the duration of each video. The pipeline interface is configured to perform resolution reduction on a video file based on a file descriptor and an analysis policy delivered by the policy monitoring interface, forward, through the application framework, a data address of the video file obtained after resolution reduction is performed to the hardware abstraction layer, and then report an analysis result of a highlight clip returned by the hardware abstraction layer to the policy monitoring interface. The theme summary interface is configured to obtain a theme corresponding to content of the highlight clip.

The application framework layer, referred to as a framework layer for short, may be configured to support running of modules in the medium middle platform framework layer. For example, the framework layer may include a one-tap clip formation interface, a parameter management interface, an image data transmission interface, a theme analysis interface, a performance analysis interface, and the like.

The hardware abstraction layer is an encapsulation of a Linux kernel driver, and provides an interface upward. The hardware abstraction layer hides hardware interface details of a specific platform, and provides a virtual hardware platform for an operating system, so that the operating system is hardware-independent, and can be ported on a plurality of platforms. For example, the hardware abstraction layer may include a highlight clip algorithm, a face detection algorithm, a video acceleration algorithm, and an image super-resolution algorithm. The highlight clip algorithm is an image processing algorithm provided by an image chip. The algorithm can score each frame of image based on an image color, an image texture feature, image quality, a frame interpolation between a previous frame and a next frame, an edge change rate value, and the like of each frame of image. A scoring result may be used as a basis for evaluating whether one frame of image is a highlight clip. For example, when a scoring result of one frame of image is greater than or equal to 60 points, the frame of image is the highlight clip.

It should be noted that, the layers in the software structure shown in FIG. 2 and components included in each layer do not constitute a specific limitation on the terminal device. In some other embodiments, the terminal device may include more layers than those shown in the figure, for example, a system library (FWK LIB) layer and a kernel (kernel) layer. In addition, each layer may include more or fewer components than those shown in the figure. This is not limited in this application.

It may be understood that to implement the policy determining method for generating a video in embodiments of this application, the terminal device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person of skill in the art may implement the described functions by using different methods with reference to embodiments for each particular application

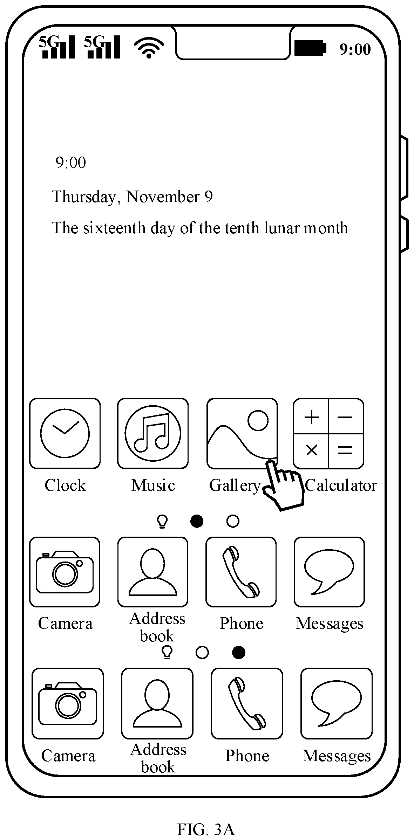

The following provides a detailed description of related interface schematic diagrams of the policy determining method for generating a video provided in embodiments of this application with reference to FIG. 3A to FIG. 3F to FIG. 6A to FIG. 6D.

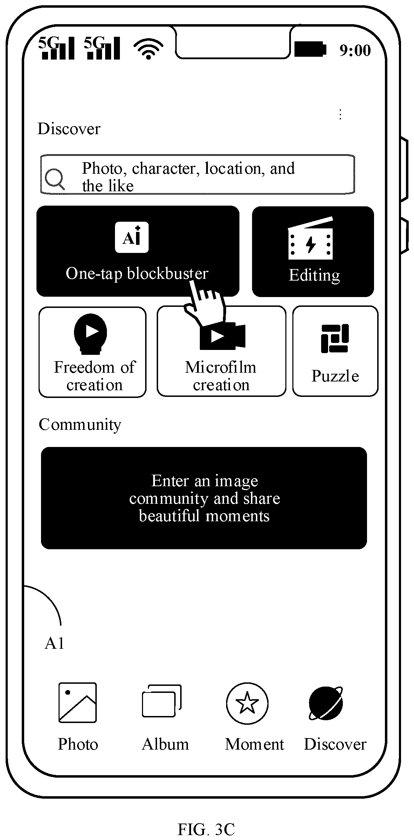

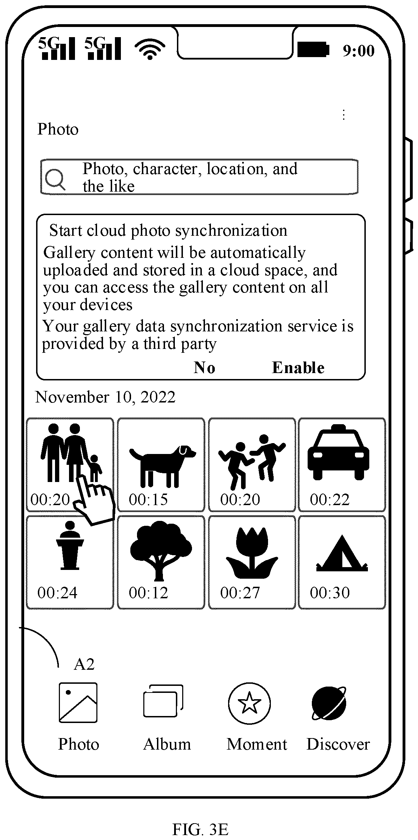

In an exemplary application scenario, a user captures a plurality of video materials in advance by using a mobile phone, and the mobile phone stores the plurality of video materials in a gallery. As shown in FIG. 3A, a control of the gallery is displayed on a desktop of the mobile phone. When the user wants the mobile phone to generate an edited video clip based on the plurality of video materials, the user may tap the control of the gallery on the desktop of the mobile phone. In response to a tap operation performed by the user on the control of the gallery, the mobile phone displays a gallery interface A1. As shown in FIG. 3B, a "one-tap blockbuster" control is provided on the gallery interface A1. As shown in FIG. 3C, the user may tap the "one-tap blockbuster" control. In response to a tap operation performed by the user on the "one-tap blockbuster" control, the mobile phone displays a gallery interface A2. As shown in FIG. 3D, the gallery interface A2 may include a plurality of recently captured video materials, for example, a plurality of video materials captured on November 10, 2022. The user may tap any one of the plurality of video materials. As shown in FIG. 3E the user taps a first video material of the plurality of video materials. In response to a tap operation performed by the user on the any video material, the mobile phone displays a gallery interface A3. The gallery interface A3 includes all the materials in the gallery. In this way, the user can select video materials required for generating a video clip on the gallery interface A3. For example, as shown in FIG. 3F, it is assumed that the user selects five video materials. The gallery interface A3 further includes a video generation control. For example, as shown in FIG. 3F, the video generation control is a tick "√".

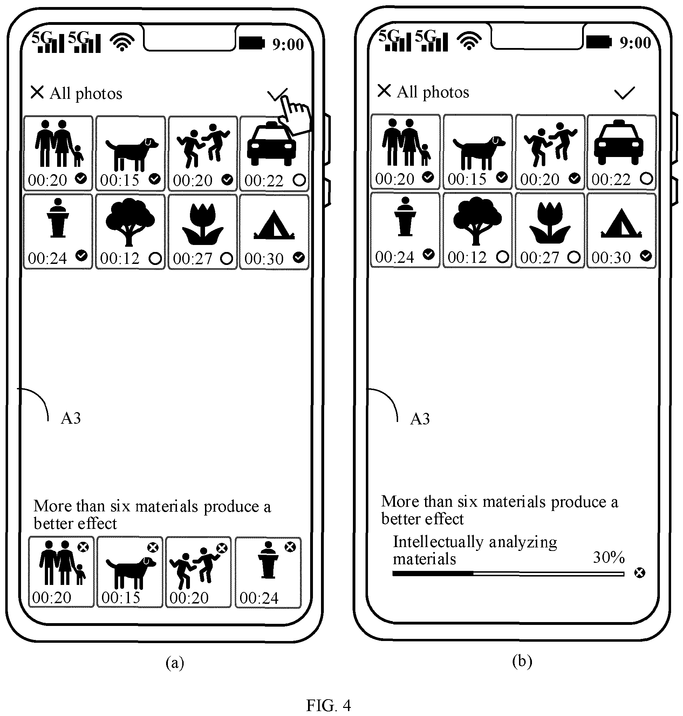

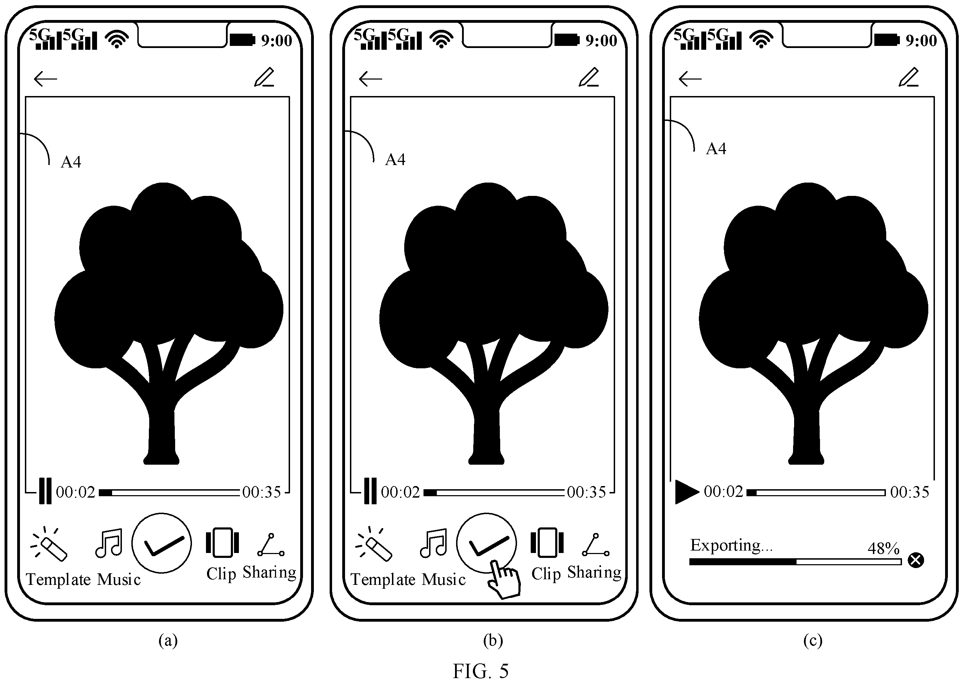

Still referring to (a) in FIG. 4, after selecting the video materials, the user may tap the video generation control, for example, tap the tick "√". As shown in (b) in FIG. 4, in response to the tap operation performed by the user on the tick "√" control, the mobile phone starts to analyze the five video materials selected by the user on the gallery interface A3, selects highlight clips (namely, brilliant clips, such as a smiling face clip of the user and a winning moment clip) from the video materials, and generates a video clip based on the selected highlight clips. In this process, the mobile phone may display a material analysis progress on the gallery interface A3, so that the user can intuitively view the analysis progress. In an example, as shown in (a) in FIG. 5, after the video clip is generated, the mobile phone displays a gallery interface A4. The gallery interface A4 includes the generated video clip, and the mobile phone can automatically play the video clip. In addition, a video export control may be provided on the gallery interface A4. As shown in (b) in FIG. 5, the user may tap the video export control. In response to a tap operation performed by the user on the video export option, the mobile phone exports the video clip, as shown in (c) in FIG. 5, and stores the video clip in the gallery. In this way, the user can view the video clip in the gallery.

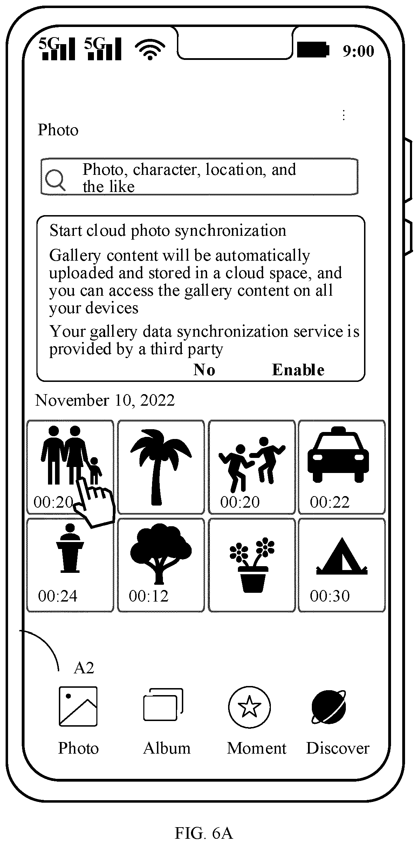

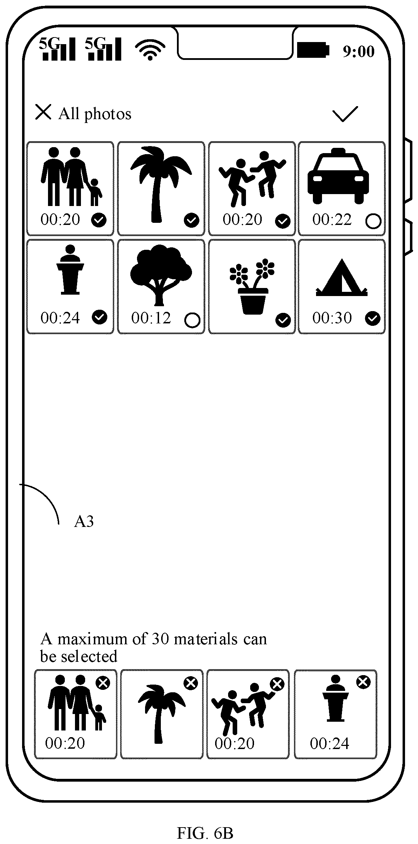

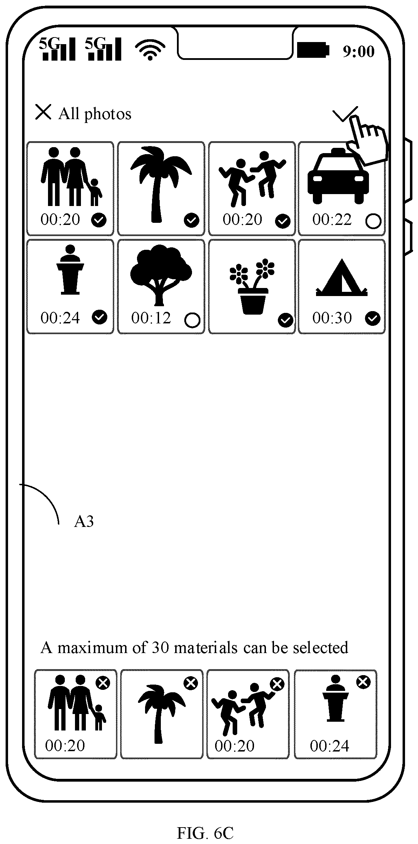

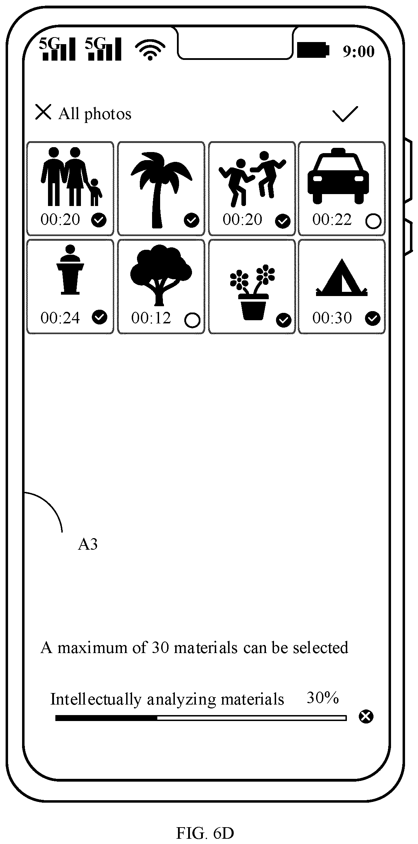

In another exemplary application scenario, the user captures a plurality of video materials and a plurality of image materials in advance by using the mobile phone, and the mobile phone stores the plurality of video materials and the plurality of image materials in the gallery. In this way, the user can select the video materials and the image materials in the gallery, so that the mobile phone generates the video clip based on the video materials and the image materials. In an example, as shown in FIG. 6A, after the gallery interface A2 is entered, the gallery interface A2 includes a plurality of video materials and a plurality of image materials captured recently. The user may tap any one of the plurality of video materials and the plurality of image materials, for example, tap the first video material. In response to a tap operation performed by the user on the any material, the mobile phone displays a gallery interface A3. The gallery interface A3 includes all the materials in the gallery. In this way, the user can select materials required for generating a video clip on the gallery interface A3. For example, as shown in FIG. 6B, it is assumed that the user selects four video materials and two picture materials. The gallery interface A3 further includes a video generation control. For example, as shown in FIG. 6B, an icon of the video generation control is a tick "√". Referring to FIG. 6C, after selecting the materials, the user may tap the video generation control, for example, tap the tick "√" control. As shown in FIG. 6D, in response to the tap operation performed by the user on the tick "√", the mobile phone starts to analyze the four video materials and the two picture materials selected by the user on the gallery interface A3, selects highlight clips from the video materials, and selects a highlight picture (namely, a brilliant picture) from the two picture pictures. In this process, the mobile phone may display a material analysis progress on the gallery interface A3, so that the user can intuitively view the analysis progress. In an example, as shown in (a) in FIG. 5, after the video clip is generated, the mobile phone displays a gallery interface A4. The gallery interface A4 includes the generated video clip, and the mobile phone can automatically play the video clip. In addition, a video export control may be provided on the gallery interface A4. As shown in (b) in FIG. 5, the user may tap the video export control. In response to a tap operation performed by the user on the video export control, the mobile phone exports the video clip, as shown in (c) in FIG. 5, and stores the video clip in the gallery. In this way, the user can view the video clip in the gallery.

In an example, if a quantity of materials selected by the user is small, during selection of the materials by the user, the mobile phone may prompt the user, so that the user can learn that selecting how many materials is proper. For example, as shown in FIG. 3F, prompt information indicating that "more than six materials produce a better effect" is displayed on the gallery interface A3, so that the user can learn that at least how many materials are selected can generate a video clip with a better effect.

In an example, if a quantity of materials selected by the user is large, during selection of the materials by the user, the mobile phone may prompt the user, so that the user can learn that how many materials can be selected at most. For example, as shown in FIG. 6B, prompt information indicating that "a maximum of 30 materials can be selected" is displayed on the gallery interface A3, so that the user can learn that how many materials can be selected at most.

In an example, after the video clip is generated, other function controls may be further provided on an application interface A4 on which the video clip is displayed, so that the user can perform operations such as editing, adding a special effect, and analyzing on the generated video clip based on the function controls. For example, as shown in (a) in FIG. 5, the other function controls may include, but are not limited to, controls such as a template, music, a clip, and sharing.

In an example, after the electronic device detects the operation of taping the "one-tap blockbuster" control by the user, the electronic device may perform the policy determining method for generating a video provided in embodiments of this application, perform analysis processing on a plurality of videos selected by the user, and display the display interface A4 shown in (a) in FIG. 5.

It should be understood that, the foregoing application scenarios are examples of application scenarios in embodiments of this application and do not constitute a limitation on the application scenarios in embodiments of this application.

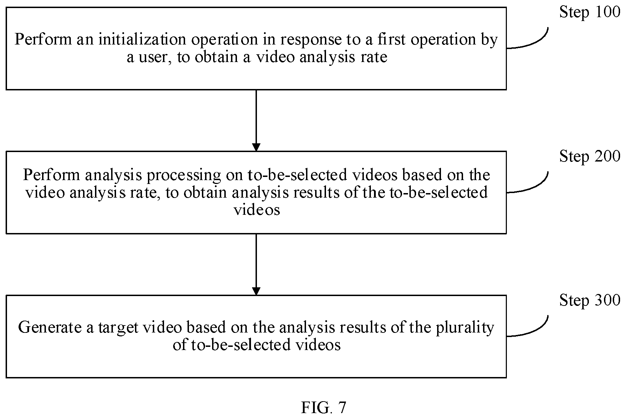

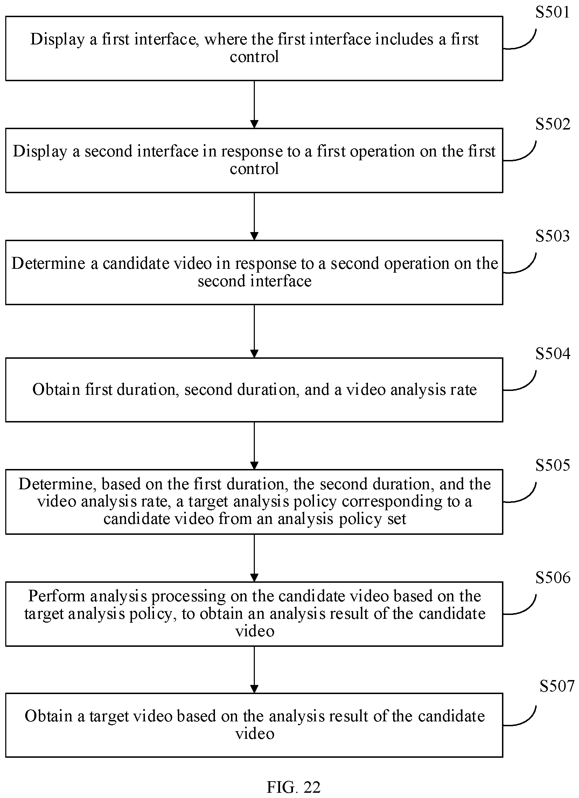

The following provides a detailed description of the policy determining method for generating a video provided in embodiments of this application with reference to FIG. 7 to o FIG. 22.

FIG. 7 is a schematic flowchart of a policy determining method for generating a video according to an embodiment of this application. The method may be performed by the electronic device shown in FIG. 1. The policy determining method for generating a video includes step S100 to step S300, and step S100 to step 300 are separately described in detail below.

Step 100: Perform an initialization operation in response to a first operation by a user, to obtain a video analysis rate.

Step 200: Perform analysis processing on to-be-selected videos based on the video analysis rate, to obtain analysis results of the to-be-selected videos.

Step 300: Generate a target video based on the analysis results of the plurality of to-be-selected videos.

The following provides a detailed description of step 100 "Perform an initialization operation in response to a first operation by a user, to obtain a video analysis rate".

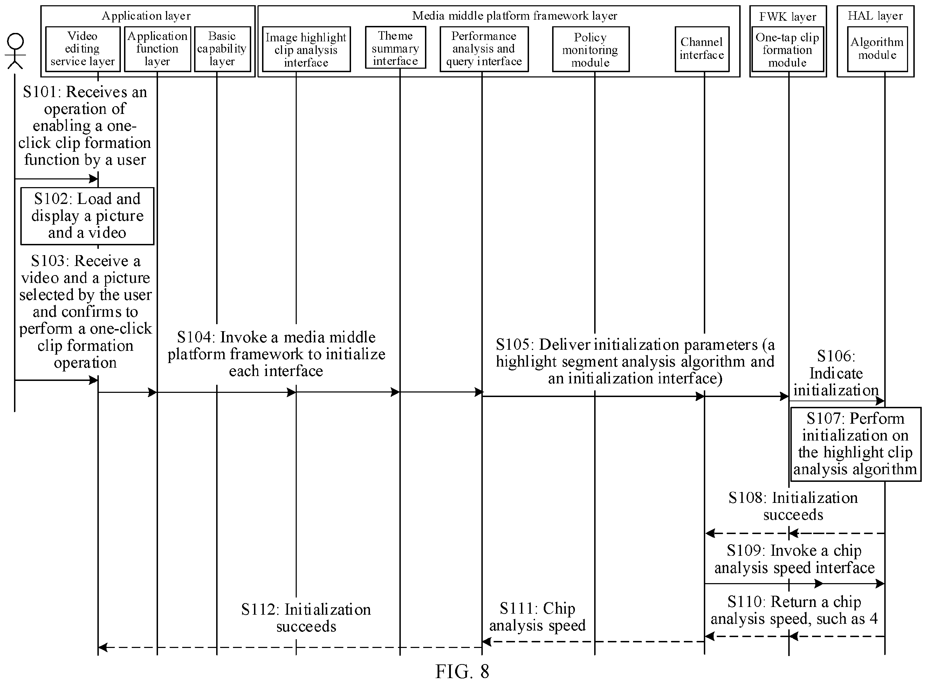

The first operation may be an operation in which the user taps a "one-tap blockbuster" control. For specific steps of the initialization operation, refer to FIG. 8.

It should be understood that, the first operation may be a tap operation, or may be a voice operation. This is not limited in embodiments of this application.

FIG. 8 is a schematic flowchart of performing an initialization operation in response to an operation of taping a "one-tap blockbuster" control by a user according to an embodiment of this application. As shown in FIG. 8, the following steps are included.

S101: A video editing service layer of an application layer receives an operation of enabling a one-tap clip formation function by a user.

S102: The video editing service layer loads and displays a picture and a video.

S103: The video editing service layer receives a video and a picture selected by the user and confirms to perform a one-tap clip formation operation.

S104: The video editing service layer invokes a media middle platform framework to initialize each interface.

A video convenience service layer may initialize an image highlight clip analysis interface, a theme summary interface, and a performance analysis and query interface in the media middle platform framework layer through an application function layer in the application layer.

S105: The media middle platform framework delivers an initialization parameter to a one-tap clip formation module of an FWR layer.

The performance analysis interface in the media middle platform framework may deliver the initialization parameter to the one-tap clip formation module of the FWR layer through a channel interface in the media middle platform framework. The delivered initialization parameter includes a highlight clip analysis algorithm corresponding to the one-tap clip formation function and a corresponding initialization interface.

S106: The one-tap clip formation module indicates an algorithm module of an HAL layer to perform an initialization operation.

S107: The algorithm module performs an initialization operation on the highlight clip analysis algorithm.

S108: The algorithm module returns an initialization success to the one-tap clip formation module.

S109: The one-tap clip formation module invokes a chip analysis speed interface from the algorithm module.

S110: The algorithm module sends the chip analysis speed to the one-tap clip formation module.

The chip analysis speed refers to a rate at which a chip in an electronic device analyzes a video, and may indicate a quantity of frame images that the electronic device can analyze per second. The chip analysis speed is a performance parameter related to the chip in the electronic device, and is usually fixed. Optionally, the chip analysis speed may also be referred to as a video analysis rate.

For example, the video analysis rate is 4.

For example, the video analysis rate is 5.

S111: The one-tap clip formation module sends the chip analysis speed to the performance analysis and query interface in the media middle platform framework layer.

S112: The performance analysis and query interface returns an instruction indicating that the initialization succeeds to the video editing service layer.

After the initialization operation is completed, the video editing service layer of the application layer obtains the video analysis rate returned by the algorithm module, and then may perform analysis on the video and/or picture selected by the user based on the video analysis rate, to obtain an analysis result, that is, perform related operations of step 200.

The following provides step 200 "Perform analysis processing on to-be-selected videos based on the video analysis rate, to obtain analysis results of the to-be-selected videos".

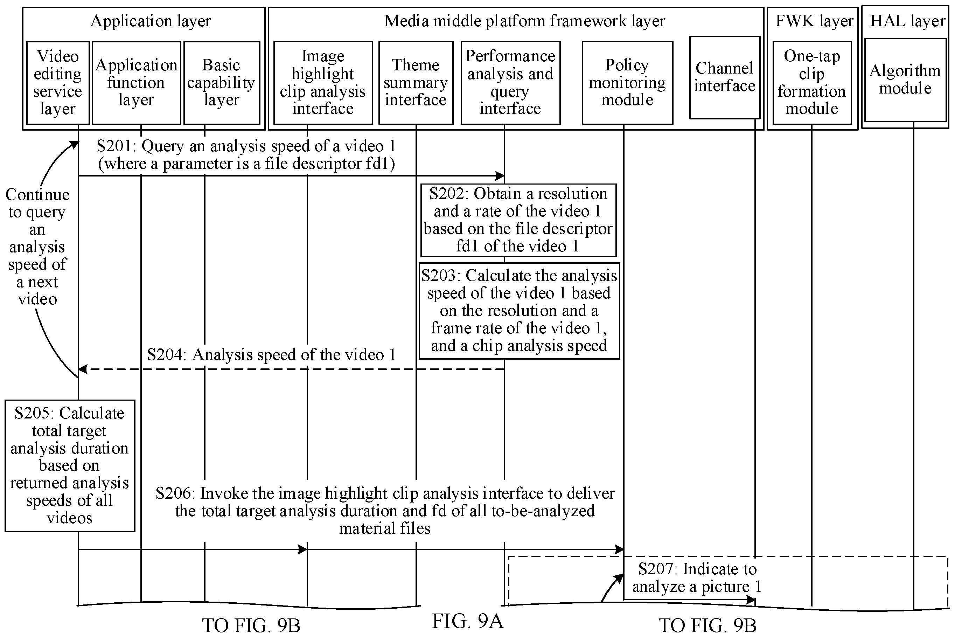

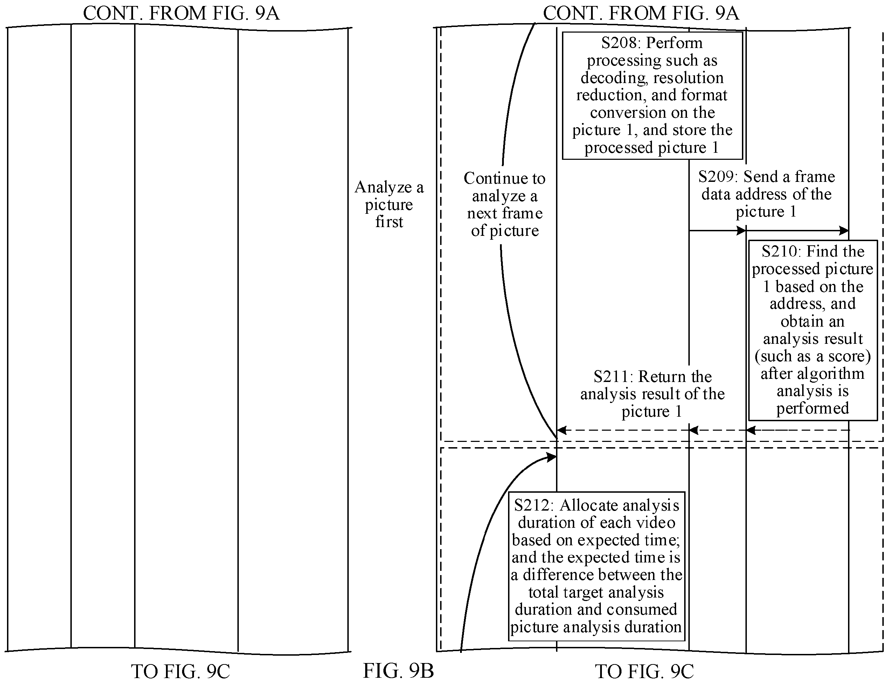

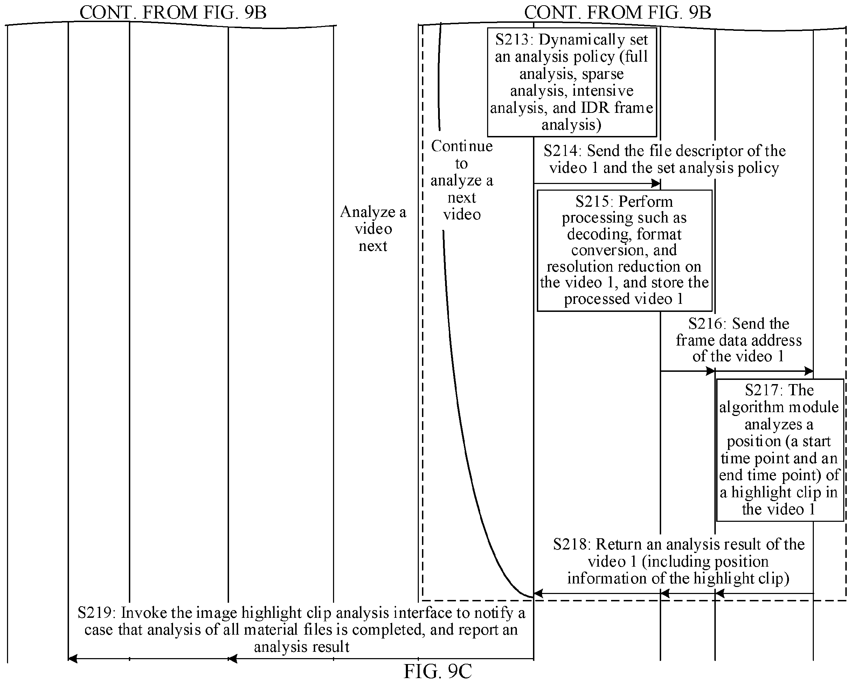

Specific steps of performing analysis processing on candidate videos to obtain a corresponding analysis result may be shown in FIG. 9A to FIG. 9C, and include the following steps.

S201: A video editing service layer of an application layer queries a performance analysis interface of a media middle platform framework layer for an analysis speed of a video 1.

The video 1 may be a video selected on the interface A3 shown in FIG. 3F. The selected video is a video material for a one-tap blockbuster function. The analysis speed of the video may be queried through a file descriptor of the video. For example, a file descriptor of the video 1 is fd1.

S202: The performance analysis interface of the media middle platform framework layer obtains a resolution and a rate of the video 1 based on the file descriptor fd1 of the video 1.

S203: The performance analysis interface calculates the analysis rate of the video 1 based on the resolution and a frame rate of the video 1, and a chip analysis speed.

S204: The performance analysis interface returns the analysis rate of the video 1 to the video editing service layer.

After receiving the analysis rate of the video 1, the video editing service layer continues to perform S201 to S204 until analysis speeds of all selected videos are queried.

S205: The video editing service layer calculates total target analysis duration based on the returned analysis speeds of all the videos.

The total target analysis duration may refer to duration during which all the selected videos are analyzed.

S206: The video editing service layer invokes an image highlight clip analysis interface to deliver the total target analysis duration and file descriptors of all to-be-analyzed material files to a policy monitoring module.

All the to-be-analyzed material files include videos (namely, candidate videos) and pictures selected on the interface A3 in FIG. 3F.

For example, the user may select only the pictures to perform a one-tap blockbuster operation, to obtain a target video corresponding to the one-tap blockbuster function.

For example, the user may select only the videos to perform a one-tap blockbuster operation, to obtain a target video corresponding to the one-tap blockbuster function.

For example, the user may select the pictures and the videos to perform a one-tap blockbuster operation, to obtain a target video corresponding to the one-tap blockbuster function.

It should be understood that, because a picture material usually has only one frame of image, and duration required for analyzing the picture material is usually short, analysis processing can be directly performed on the picture material without the need to select different analysis policies.

For analysis processing of the picture, refer to step S207 to step S211 in FIG. 9A to FIG. 9C, including: S207: The policy monitoring module indicates to a channel interface to perform analysis on a picture 1.

The picture 1 refers to one of all to-be-analyzed pictures.

S208: The channel interface performs decoding, resolution reduction, and format conversion processing on the picture 1, to obtain the processed picture 1, and stores the processed picture 1.

S209: The channel interface sends a frame data address of the processed picture 1 to an algorithm module in an HAL layer.

S210: The algorithm module in the HAL layer finds the processed picture 1 based on the frame data address, and performs analysis processing on the processed picture 1 through an analysis algorithm prestored in the algorithm module, to obtain an analysis result of the picture 1.

S211: The algorithm module returns the analysis result of the picture 1 to the policy monitoring module.

After receiving the analysis result of the picture 1, the policy monitoring module continues to perform S207 to S211 until analysis of all the selected pictures is completed.

The analysis result of the picture may refer to a score of the processed picture obtained through the analysis algorithm. A higher score indicates a higher probability that the picture is a picture corresponding to a highlight clip. A lower score indicates a lower probability that the picture is the picture corresponding to the highlight clip.

It should be understood that, performing analysis processing on the video material usually refers to performing analysis processing on the frame image in the video material. Performing analysis processing on the video material may be performing analysis processing on a frame image of each frame in the video material, or may be performing analysis processing on frame images of a part of frames. This is not limited in embodiments of this application. For the same candidate video (equivalent to the video material selected on the interface A3 shown in FIG. 3F), a larger quantity of processed frame images indicates longer consumed duration. Because analysis duration allocated to each candidate video is fixed, an analysis policy corresponding to each candidate video may be selected based on the analysis duration allocated to each candidate video and video duration of each candidate video. Different analysis policies correspond to different quantities of processed frame images.

For analysis processing of the video, refer to S212 to S218 in FIG. 9A to FIG. 9C, including: S212: The policy monitoring module allocates the analysis duration of each video based on expected time.

The expected time is a difference between the total target analysis duration and consumed picture analysis duration. Each video may refer to the candidate video.

S213: The policy monitoring module dynamically sets the analysis policy.

S214: The policy monitoring module sends the file descriptor of the video 1 and the set analysis policy to an interface channel.

S215: The interface channel performs processing such as decoding, format conversion, resolution reduction, and the like on the video 1, and stores the processed video 1.

S216: The interface channel sends a frame data address of the processed video 1 to the algorithm module of the HAL layer.

S217: The algorithm module analyzes a position of a highlight clip in the video 1.

It should be understood that, the analysis result of the video 1 may refer to the position of the highlight clip in the video 1. The highlight clip position includes a start time point and an end time point of the highlight clip in the video 1.

S218: The algorithm module returns the analysis result of the video 1 to the policy monitoring module.

After receiving the analysis result of the video 1, the policy monitoring module continues to analyze a next video (that is, continues to perform S212 to S218) until analysis of all the candidate videos is completed.

It should be understood that, after the analysis of all the selected videos and pictures is completed, analysis results of all the selected videos and pictures may be returned to an application function layer in an application layer. The details are as follows.

S219: The policy monitoring module invokes the image highlight clip analysis interface, to notify the application function layer in the application layer that analysis of all material files is completed, and reports the analysis result to the application function layer.

The following provides a detailed description of S213 "The policy monitoring module dynamically sets the analysis policy".

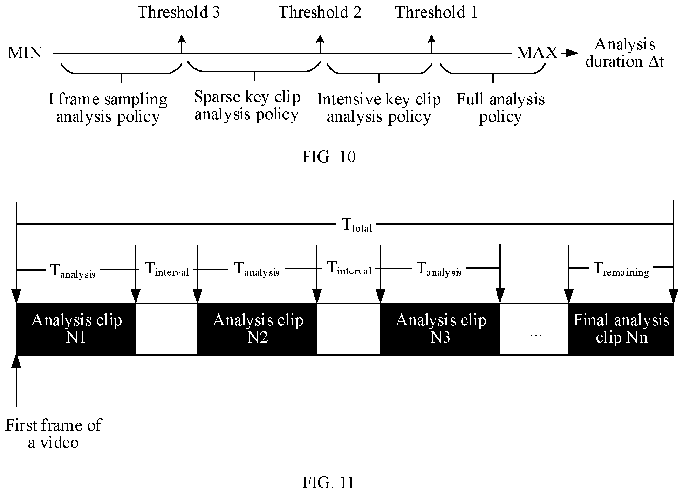

Analysis policies for performing analysis processing on the candidate videos include a full analysis policy, an intensive key clip analysis policy, a sparse key clip analysis policy, and an I frame sampling analysis policy. For the same candidate video, different analysis policies correspond to different quantities of processed frame images. The different analysis policies that are arranged in descending order of a quantity of processed frame images are: a full analysis policy, an intensive key clip analysis policy, a sparse key clip analysis policy, and an I frame sampling analysis policy. In other words, different analysis policies are used to perform analysis processing on the same candidate video. As shown in FIG. 10, duration used by using the full analysis policy is the longest, duration used by using the intensive key clip analysis policy is the second longest, duration used by using the sparse key clip analysis policy is the third longest, and duration used by using the I frame sampling analysis policy is the shortest.

For example, the full analysis policy means that when the candidate video is analyzed, the frame image of each frame in the candidate video is analyzed, to obtain the highlight clip.

For example, the intensive key clip analysis policy is an analysis policy used to perform analysis processing on N analysis clips in the candidate video, to obtain the highlight clip. The candidate video includes N analysis clips, and adjacent analysis clips include an interval clip.

For example, N is a positive integer less than or equal to 5.

For example, the intensive key clip analysis policy may be first used to calculate three target parameters: a quantity Nanalysis of analysis clips of the candidate video, duration $T_{analysis}$ of the analysis clip, interval duration $T_{interval}$ of adjacent clips. Then, the analysis clips are evenly allocated based on the three target parameters, so that the analysis clips cover highlight clips located at different positions of the candidate video as much as possible.

For example, as shown in FIG. 11, analysis clips are allocated at equal intervals starting from a first frame of an $i^{th}$ video (one of the candidate videos), to obtain an analysis clip N1, an analysis clip N2, an analysis clip N3, and the like. Duration of the analysis clip N1, the analysis clip N2, the analysis clip N3, and the like is $T_{analysis}$. Duration of a last analysis clip Nn is $T_{remaining}$.

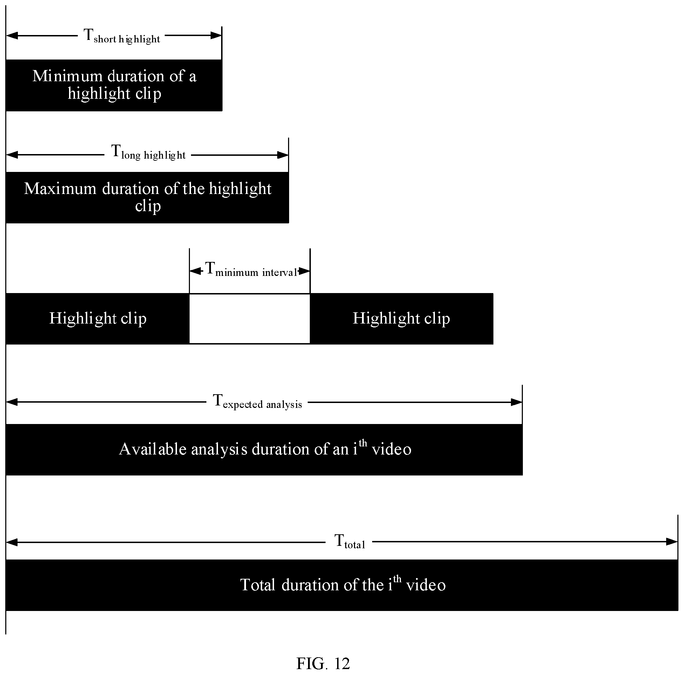

In embodiments of this application, the three target parameters may be obtained by calculation from the five initial parameters shown in FIG. 12.

Minimum duration $T_{short\ highlight}$ of a highlight clip;

maximum duration $T_{long\ highlight}$ of a highlight clip;
**a** minimum interval $T_{minimum\ interval}$ of a highlight clip;
available analysis duration $T_{expected}$ analysis allocated to the $i^{th}$ video is also referred to as expected analysis duration; and
total duration $T_{total}$ of the $i^{th}$ video.

The minimum duration $T_{short\ highlight}$ of the highlight clip is expected minimum duration configured for each highlight clip. The maximum duration $T_{long\ highlight}$ of the highlight clip is expected maximum duration configured for each highlight clip. The minimum interval $T_{minimum\ interval}$ of the highlight clip is a minimum duration interval between highlight clips of a same storyboard. The three parameters may be obtained by being configured by the application layer and delivered to the policy monitoring module.

The available analysis duration $T_{expected}$ analysis allocated to the $i^{th}$ video is the entire expected duration that is allocated by the policy monitoring module to the $i^{th}$ video based on the expected duration and that is configured for analyzing the video.

Total duration $T_{total}$ of the $i^{th}$ video is the video duration of the $i^{th}$ video. In embodiments of this application, total duration of one video may be set to not exceed 30 seconds, so that a calculation amount of data on a highlight clip interface can be reduced.

It should be noted that, line segment lengths corresponding to the duration in FIG. 11 are merely exemplary descriptions. During actual implementation, specific values of the duration may be adjusted based on an actual requirement.

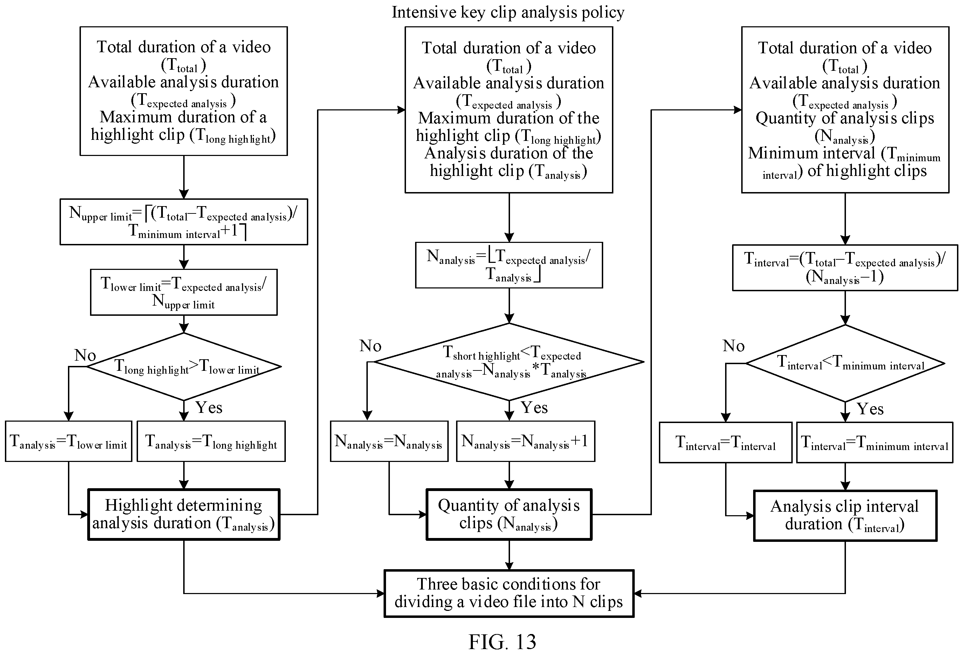

The following exemplarily describes, with reference to FIG. 13, a principle of calculating three target parameters based on five initial parameters.

(1) Based on the total duration $T_{total}$ of the $i^{th}$ video, the available analysis duration $T_{expected}$ analysis allocated to the $i^{th}$ video, and the minimum interval $T_{minimum\ interval}$ of the highlight clip, a maximum quantity Nupperlimit of analysis clips, namely, an upper limit value of the analysis clip is determined.

In an example, Nupperlimit can be obtained by calculation through the following relationship:

$$N_{upper\ limit} = \lceil (T_{total} - T_{expected\ analysis}) / T_{minimum\ interval} + 1 \rceil .$$

$\lceil\ \rceil$ is a round-down symbol.

For example, a maximum value of $N_{upper\ limit}$ is in a range of [1 to 5], and $N_{upper\ limit}$ is an integer. For example, when a terminal device sets a maximum value of Nupperlimit to 4 in advance, if $N_{upper\ limit} = 5$ is obtained by calculation by using the foregoing relationship, a final value of Nupperlimit is set to 4.

It should be understood that, the difference between the total duration $T_{total}$ of the $i^{th}$ video and the available analysis duration $T_{expected}$ analysis allocated to the $i^{th}$ video is the total duration of all the interval clips. The total duration of all the interval clips is divided by the minimum interval $T_{minimum\ interval}$ of the highlight clip, so that an upper limit value of the interval clip may be obtained. Because one interval clip is set between two analysis clips, a quantity of analysis clips is greater than a quantity of interval clips by 1. In this way, by using $T_{total}$, $T_{expected}$ analysis , and $T_{minimum}$ interval, the upper limit value of the analysis clip may be obtained.

(2) Based on the maximum quantity Nupperlimit of analysis clips and the available analysis duration $T_{expected}$ analysis allocated to the $i^{th}$ video, the minimum duration $T_{lower\ limit}$ of the analysis clip is determined.

In an example, $T_{lower\ limit}$ can be obtained by calculation through the following relationship:

$$T_{lower\ limit} = \frac{T_{expected\ analysis}}{N_{upper\ limit}} .$$

It should be understood that, when the available analysis duration $T_{expected}$ analysis allocated to the $i^{th}$ video is a fixed value, and when the quantity of analysis clips is set to the maximum quantity $N_{upper\ limit}$, the duration of the analysis clip that is obtained by calculation is the minimum duration $T_{lower\ limit}$.

(3) Based on the minimum duration $T_{lower\ limit}$ of the analysis clip and the maximum duration $T_{long\ highlight}$ of the highlight clip, the duration $T_{analysis}$ of the analysis clip is determined.

In an implementation, the minimum duration $T_{lower\ limit}$ of the analysis clip does not need to be considered. The maximum duration $T_{long\ highlight}$ of the highlight clip is used by default as the duration $T_{analysis}$ of the analysis clip. In this case, the following relationship exists:

$$T_{analysis} = T_{long\ highlight} .$$

In another implementation, the minimum duration $T_{lower\ limit}$ of the analysis clip needs to be considered. The longer duration of the minimum duration $T_{lower\ limit}$ of the analysis clip and the maximum duration $T_{long\ highlight}$ of the highlight clip is used as the duration $T_{analysis}$ of the analysis clip. In this case, the following relationship exists:

$$T_{analysis} = \max(T_{long\ highlight}, T_{lower\ limit}) .$$

max is a symbol of a maximum number.

It should be understood that, the longer duration of the minimum duration Tlowerlimit of the analysis clip and the maximum duration $T_{long\ highlight}$ of the highlight clip is used as the duration $T_{analysis}$ of the analysis clip. Therefore, the duration of the analysis clip can be properly increased, to cover as many positions of the highlight clips as possible, thereby improving accuracy of the finally extracted highlight clip.

(4) Based on the duration $T_{analysis}$ of the analysis clip and the available analysis duration $T_{expected\ analysis}$ allocated to the $i^{th}$ video, the quantity Nanalysis of analysis clips is determined.

In an implementation, Nanalysis can be obtained by calculation through the following relationship:

$$N_{analysis} = \left\lfloor \frac{T_{exp\ ectedanalysis}}{T_{analysis}} \right\rfloor.$$

$\llcorner\lrcorner$ is a round-down symbol.

In another implementation, after Nanalysis is obtained by calculation in the foregoing manner, there may be further remaining analysis duration Tremaining that is less than the duration $T_{analysis}$ of the analysis clip in the available analysis duration $T_{expected\ analysis}$ allocated to the $i^{th}$ video:

$$T_{remaining} = T_{expected\ analysis} - N_{analysis} * T_{analysis}$$

The remaining analysis duration Tremaining may be greater than the minimum duration $T_{short\ highlight}$ of the highlight clip. In this case, one more analysis clip may be added based on Nanalysis , and the remaining analysis duration Tremaining is used as the duration of the last analysis clip.

Specifically, Nanalysis can be obtained by calculation through the following relationship:

$$N_{analysis} = \left\{ \begin{array}{l} N_{analysis}\ ; T_{remaining} < T_{short\ highlight} \\ N_{analysis} + 1\ ; T_{remaining} \geq T_{short\ highlight} \end{array} \right.$$

It should be understood that, when the remaining analysis duration Tremaining is greater than the minimum duration $T_{short\ highlight}$ of the highlight clip, one analysis clip is added, so that all expected analysis duration can be effectively utilized, and more positions of highlight clips are covered, thereby improving the accuracy of the finally extracted highlight clip.

(5) Based on the quantity Nanalysis of analysis clips, the total duration $T_{total}$ of the $i^{th}$ video, and the available analysis duration $T_{expected\ analysis}$ allocated to the $i^{th}$ video, the interval duration $T_{interval}$ of the analysis clip is determined.

In an implementation, a minimum interval $T_{minimum\ interval}$ of the highlight clip does not need to be considered, and $T_{interval}$ can be directly obtained by calculation through the following relationship:

$$T_{interval} = \frac{T_{total} - T_{expected\ analysis}}{N_{analysis} - 1}.$$

In another implementation, the minimum interval $T_{minimum\ interval}$ of the highlight clip needs to be considered. The greater interval of $T_{interval}$ obtained by calculation in the foregoing manner and the minimum interval $T_{minimum\ interval}$ of the highlight clip is used as the interval duration $T_{interval}$ of the analysis clip. In this case, the following relationship exists:

$$T_{interval} = \max(T_{interval}, T_{minimum\ interval}).$$

It should be understood that, the minimum interval $T_{minimum\ interval}$ of the highlight clip is a minimum interval obtained by calculation by the application layer. To avoid a problem that an excessively small interval results in excessively concentrated analysis clips, when $T_{interval}$ is less than the minimum interval $T_{minimum\ interval}$ of the highlight clip, $T_{interval}$ should be set to $T_{minimum\ interval}$.

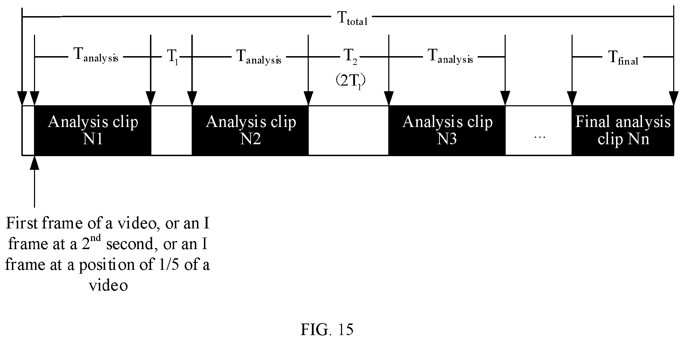

In this case, the policy monitoring module has obtained three target parameters: the quantity Nanalysis of analysis clips of the material video, the duration $T_{analysis}$ of the analysis clip, and the interval duration $T_{interval}$ of adjacent clips. Then, the analysis clips are evenly allocated based on the three target parameters. Specifically, as shown in FIG. 15, analysis clips are allocated at equal intervals starting from a first frame of the $i^{th}$ video file. Duration of the analysis clip N1, the analysis clip N2, the analysis clip N3, and the like is $T_{analysis}$ . Duration of a last analysis clip Nn is Tremaining .

It should be understood that, compared with a case that the full analysis policy is used to perform decoding, resolution reduction, and scoring on all video frames, the intensive key clip analysis policy only needs to be used to perform decoding, resolution reduction, and scoring on video frames of several key clips. Therefore, the highlight clips can be obtained faster by using the intensive key clip analysis policy, and a video set including the highlight clips is generated.

For example, the sparse key clip analysis policy is a policy of dividing the candidate video into N analysis clips and performing analysis processing on the N analysis clips, where interval duration between the N analysis clips is different.

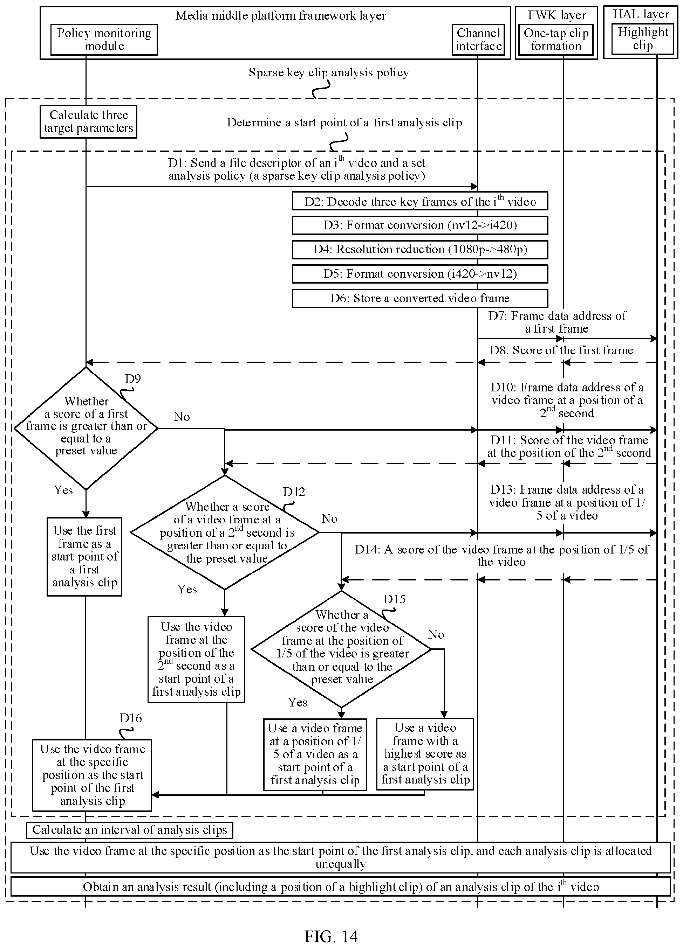

For example, the sparse key clip analysis policy may be used to first calculate the three target parameters: the quantity Nanalysis of analysis clips of the material video, the duration $T_{analysis}$ of the analysis clip, and the interval duration $T_{interval}$ of the adjacent clips (as shown in FIG. 13) based on the minimum duration $T_{short\ highlight}$ of the highlight clip, the maximum duration $T_{long\ highlight}$ of the highlight clip, the minimum interval $T_{minimum\ interval}$ of the highlight clip, the available analysis duration $T_{expected\ analysis}$ allocated to the $i^{th}$ video, and the total duration $T_{total}$ of the $i^{th}$ video. Then, a start point of a first analysis clip is determined (as shown in FIG. 14). Then, based on the three target parameters, the interval duration of the adjacent clips is allocated unequally, and the analysis clips are mainly distributed in a front or middle clip of the video, and the analysis clips are properly allocated in a tail clip of the video. Finally, the analysis clips of the $i^{th}$ video are scored, to obtain an analysis result of the highlight clip.

For example, as shown in FIG. 15, a specific frame that satisfies a picture quality requirement in the first frame of the $i^{th}$ video, or an I frame at a position of a $2^{nd}$ second, or an I frame at a position of 1/5 of the video is used as the start point of the first analysis clip N1. Then, from the start point, N analysis clips whose duration is $T_{analysis}$ are set based on different intervals. Interval duration between the analysis clip N1 and the analysis clip N2 is $T_1$, interval duration between the analysis clip N2 and the analysis clip N3 is $T_2$ ($T_2 = 2T_1$), and the rest is deduced by analogy. The duration of the last analysis clip Nn is set to Tremaining .

It should be noted that, a specific manner of obtaining the three target parameters, namely, the quantity Nanalysis of analysis clips of the material video, the duration $T_{analysis}$ of the analysis clip, and the interval duration $T_{interval}$ of the adjacent clips, is the same as a manner of obtaining the three target parameters by using the intensive key clip analysis policy.

The following exemplarily describes, with reference to FIG. 14, a procedure of determining the start point of the first analysis clip.

D1: A policy monitoring module delivers a file descriptor fdi of an $i^{th}$ video and an analysis policy (a sparse key clip analysis policy) set for the $i^{th}$ video to a pipeline interface.

D2: The pipeline interface decodes three key frames of the $i^{th}$ video based on the file descriptor fdi of the $i^{th}$ video and the analysis policy (the sparse key clip analysis policy) set for the $i^{th}$ video.

The policy monitoring module delivers the analysis policy (the sparse key clip analysis policy) set for the $i^{th}$ video, so that the pipeline interface may determine, according to the policy, that to-be-decoded video frames are the three key frames of the $i^{th}$ video.

For example, the three key frames may include a first frame at a start point of the $i^{th}$ video, an I frame at a position of a $2^{nd}$ second, and an I frame at a position of 1/5 of the $i^{th}$ video.

It should be noted that, different from a case that the third key frame in the I frame-based simple analysis policy is "the I frame at a position of 1/3 of the $i^{th}$ video", the third key frame in the sparse key clip analysis policy is "the I frame at the position of 1/5 of the $i^{th}$ video". This is because one highlight clip is directly determined based on the I frame simple analysis policy, while the sparse key clip analysis policy needs to first determine a plurality of analysis clips, and then screen out the highlight clip from the plurality of analysis clips. To enable the plurality of analysis clips to cover a front or middle clip of the $i^{th}$ video as much as possible, the third key frame in the sparse key clip analysis policy is closer to a start position of the video.

In addition, embodiments of this application are described by using an example in which the third key frame in the sparse key clip analysis policy is "the I frame at the position of 1/5 of the $i^{th}$ video", and may alternatively be "an I frame at a position of 1/4 of the $i^{th}$ video", "an I frame at a position of 1/6 of the $i^{th}$ video", or the like, which may be adjusted based on an actual requirement.

D3: The pipeline interface is configured to convert a format of each of the decoded three key frames from a first format to a second format.

For example, the first format is an nv12 format, and the second format is an i420 format.

D4: The pipeline interface is configured to reduce a resolution of each of the three key frames on which format change is performed from a first resolution to a second resolution.

For example, the first resolution is 1080p, and the second resolution is 480p.

In some embodiments, the second resolution corresponding to different analysis policies may be different or the same. Therefore, in D2, the policy monitoring module delivers the analysis policy (the sparse key clip analysis policy) set for the $i^{th}$ video, so that the pipeline interface can determine a second resolution corresponding to the sparse key clip analysis policy.

D5: The pipeline interface is configured to convert a format of each of the three key frames on which resolution reduction is performed from the second format to the first format.

To improve a processing speed of the three key frames by a highlight clip algorithm interface, before performing highlight analysis on the video frames, the pipeline interface may perform resolution reduction processing on the video frames. In addition, because a resolution reduction algorithm supports only the second format, the three key frames need to be first converted from the first format to the second format, then resolutions of the video frames need to be reduced, and a format of each of the video frames on which resolution reduction is performed is converted to the original first format.

D6: The pipeline interface is configured to store the three key frames whose formats are converted into the first format again in a buffer (buffer).

D7: The pipeline interface is configured to send a data address of a first frame at the start point of the $i^{th}$ video to the highlight clip algorithm interface through a one-tap clip formation interface.

D8: The highlight clip algorithm interface is configured to obtain the first frame based on the data address of the first frame, perform analysis on the first frame based on the preset highlight clip algorithm, to obtain a score of the first frame, and then return the score of the first frame to the policy monitoring module through the one-tap clip formation interface and the pipeline interface in sequence.

D9: The policy monitoring module determines whether a score of the first frame is greater than or equal to a preset value.

An example in which the preset value is 60 points is used. If the score of the first frame is greater than or equal to 60 points, the first frame may be used as the start point of the first analysis clip, and D16 is performed without a need to perform D10 to D15. If the score of the first frame is less than 60 points, D10 may be performed.

D10: The policy monitoring module notifies the pipeline interface to deliver a data address of the I frame at the position of the $2^{nd}$ second to the highlight clip algorithm interface. The pipeline interface sends the data address of the I frame at the position of the $2^{nd}$ second to the highlight clip algorithm interface through the one-tap clip formation interface.

D11: The highlight clip algorithm interface is configured to obtain the I frame at the position of the $2^{nd}$ second based on the data address of the I frame at the position of the $2^{nd}$ second, perform analysis on the I frame at the position of the $2^{nd}$ second based on the preset highlight clip algorithm, to obtain a score of the I frame at the position of the $2^{nd}$ second, and then return the score of the I frame at the position of the $2^{nd}$ second to the policy monitoring module through the one-tap clip formation interface and the pipeline interface in sequence.

D12: The policy monitoring module determines whether the score of the I frame at the position of the $2^{nd}$ second is greater than or equal to the preset value.

An example in which the preset value is 60 points is still used. If the score of the I frame at the position of the $2^{nd}$ second is greater than or equal to 60 points, the I frame at the position of the $2^{nd}$ second may be used as the start point of the first analysis clip, and D16 is performed without a need to perform D13 to D15. If the score of the I frame at the position of the $2^{nd}$ second is less than 60 points, D13 may be performed.

D13: The policy monitoring module notifies the pipeline interface to deliver a data address of the I frame at the position of 1/5 to the highlight clip algorithm interface. The pipeline interface sends the data address of the I frame at the position of 1/5 to the highlight clip algorithm interface through the one-tap clip formation interface.

D14: The highlight clip algorithm interface is configured to obtain the I frame at the position of 1/5 based on the data address of the I frame at the position of 1/5, perform analysis on the I frame at the position of 1/5 based on the preset highlight clip algorithm, to obtain a score of the I frame at the position of 1/5, and then return the score of the I frame at the position of 1/5 to the policy monitoring module through the one-tap clip formation interface and the pipeline interface in sequence.

D15: The policy monitoring module determines whether the score of the I frame at the position of 1/5 is greater than or equal to the preset value.

An example in which the preset value is 60 points is still used. If the score of the I frame at the position of 1/5 is greater than or equal to 60 points, the I frame at the position of 1/5 may be used as the start point of the first analysis clip, and D16 is performed. If the score of the I frame at the position of 1/5 is also less than 60 points, a video frame with a highest score in the three key frames may be used as the start point of the first analysis clip, and B16 is performed.

It should be noted that, D9, D12, and D15 are described by using an example in which the preset values at the three positions are equal. During actual implementation, the three preset values may not be completely equal. This is not limited in embodiments of this application.

D16: The policy monitoring module determines one of the three key frames as the start point of the first analysis clip.

After determining the start point of the first analysis clip, the policy monitoring module further needs to calculate an interval of each analysis clip based on the interval duration $T_{interval}$ of the adjacent clips and the minimum interval $T_{minimum\ interval}$ of the highlight clip.

Specifically, the first interval duration $T_i$ set between the first analysis clip N1 and the second analysis clip N2 is equal to $\max(T_{interval} / n, T_{minimum\ interval})$. Interval duration $T_i$ after the second analysis clip N2 is equal to $\min(m * T_{i-1}, T_{interval})$, where $T_{i-1}$ is previous interval duration of $T_i$. Both n and m are greater than 1, and i is an integer greater than or equal to 2.

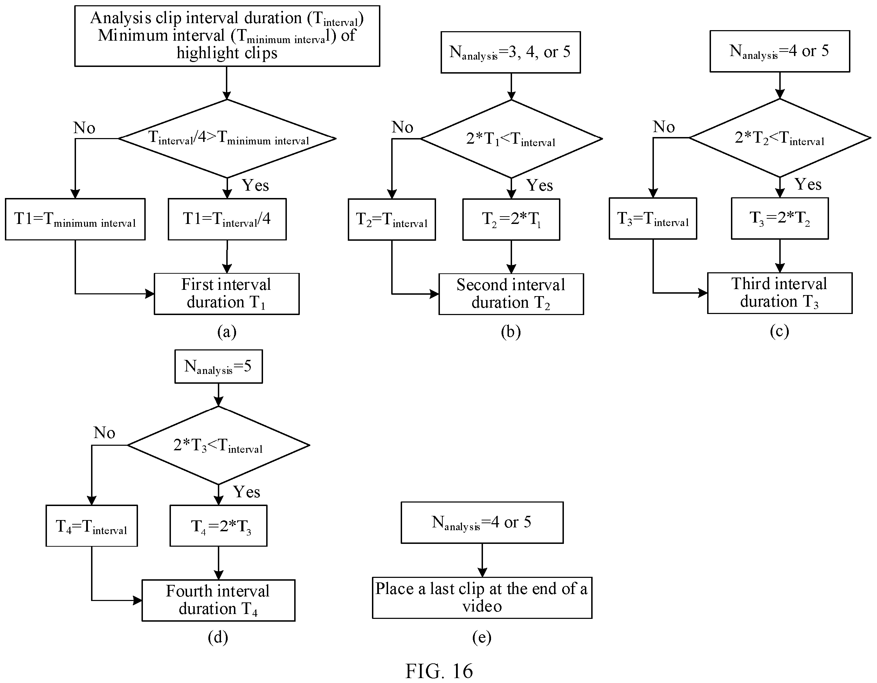

An example in which a maximum quantity $N_{upper\ limit}$ of analysis clips is equal to 5, where n=4, and m=2 is used. With reference to FIG. 16, a procedure in which the policy monitoring module is configured to calculate the intervals of the analysis clips is exemplarily described.

When the quantity Nanalysis of analysis clips is greater than or equal to 2 (for example, $N_{analysis} = 2,3,4$, or 5), the first interval duration $T_1$ is set between the first analysis clip N1 and the second analysis clip N2.

An obtaining procedure of the first interval duration $T_1$ is shown in (a) in FIG. 16.

The policy monitoring module determines whether $T_{interval} / 4$ is greater than $T_{minimum\ interval}$;

$$\text{if}\ \ T_{interval} / 4 > T_{minimum\ interval}\ ,\ \ T_1 = T_{interval} / 4\ ;$$

and

$$\text{if}\ \ T_{interval} / 4 \leq T_{minimum\ interval}\ ,\ \ T_1 = T_{minimum\ interval}\ .$$

It should be understood that, the minimum interval $T_{minimum\ interval}$ of the highlight clip is a minimum interval obtained by calculation by the application layer. To avoid a problem that an excessively small interval results in excessively concentrated analysis clips, when $T_{interval} / 4$ is less than or equal to the minimum interval $T_{minimum\ interval}$ of the highlight clip, the first interval duration $T_1$ should be set to $T_{minimum}$ interval .

When the quantity Nanalysis of analysis clips is greater than or equal to 3 (for example, $N_{analysis}$ = 3, 4, or 5), the second interval duration $T_2$ is set between the second analysis clip N2 and the third analysis clip N3.

An obtaining procedure of the second interval duration $T_2$ is shown in (b) in FIG. 16.

The policy monitoring module determines whether $2*T_1$ is less than $T_{interval}$;

$$\text{if}\ \ 2*T_1 < T_{interval}\ ,\ \ T_2 = 2*T_1\ ;$$

and

$$\text{if}\ \ 2*T_1 \geq T_{interval}\ ,\ \ T_2 = T_{interval}$$

It should be understood that, a smaller value between $2*T_1$ and $T_{interval}$ is used as $T_2$, so that interval duration between the second analysis clip N2 and the third analysis clip N3 can be shortened, and the analysis clips are more concentrated in the front or middle clip of the video. Because there is a high probability that the front or middle clip of the video is content of interest to the user, it is more conducive to extracting the highlight clips more accurately and quickly.

When the quantity Nanalysis of analysis clips is greater than or equal to 4 (for example, $N_{analysis}$ = 4 or 5), the third interval duration $T_3$ is set between the third analysis clip N3 and the fourth analysis clip N4.

An obtaining procedure of the third interval duration $T_3$ is shown in (c) in FIG. 16.

The policy monitoring module determines whether $2*T_2$ is less than $T_{interval}$ ;

$$\text{if}\ \ 2*T_2 < T_{interval}\ ,\ \ T_3 = 2*T_2\ ;$$

and

$$\text{if}\ \ 2*T_2 \geq T_{interval}\ ,\ \ T_3 = T_{interval}$$

It should be understood that, by using a smaller value between $2*T_2$ and $T_{interval}$ as $T_3$, interval duration between the third analysis clip N3 and the fourth analysis clip N4 can be shortened, so that the analysis clips are more concentrated in the front or middle clip of the video. Because there is a high probability that the front or middle clip of the video is content of interest to the user, it is more conducive to extracting the highlight clips more accurately and quickly.

When the quantity Nanalysis of analysis clips is greater than or equal to 5 (for example, Nanalysis = 5), the fourth interval duration $T_4$ is set between the fourth analysis clip N4 and the fifth analysis clip N5. An obtaining procedure of the fourth interval duration $T_4$ is shown in (d) in FIG. 16.

An obtaining procedure of the fourth interval duration $T_4$ is shown in (d) in FIG. 16.

The policy monitoring module determines whether $2*T$, is less than $T_{interval}$ ;

$$\text{if}\ \ 2*T_3 < T_{interval}\ ,\ \ T_4 = 2*T_3\ ;$$

and

$$\text{if}\ \ 2*T_3 \geq T_{interval}\ ,\ \ T_4 = T_{interval}$$

It should be understood that, by using a smaller value between $2*T_3$ and $T_{interval}$ as $T_4$, interval duration between the fourth analysis clip N4 and the fifth analysis clip N5 can be shortened, so that the analysis clips are more concentrated in the front or middle clip of the video. Because there is a high probability that the front or middle clip of the video is content of interest to the user, it is more conducive to extracting the highlight clips more accurately and quickly.

It should be noted that, in some cases, after the clips and the clip intervals are set, remaining duration of the last analysis clip Nn is less than duration $T_{analysis}$ of one analysis clip. For example, as shown in (e) in FIG. 16, when Nanalysis = 4 or 5, a clip corresponding to remaining duration of the ith video may be used as the last analysis clip Nn.

In conclusion, the sparse key clip analysis policy has two characteristics:

1. A first analysis clip may not be a first frame of a video. The first analysis clip needs to select one frame from a first video frame at a start point of the first video, a video frame at a position of a 2nd second in the first video, and a video frame at a position of 1/5 of the first video as the first frame of the analysis clip.

2. Interval duration between analysis clips is different in the sparse key clip analysis policy. As duration of the candidate video increases, the interval duration between two analysis clips becomes longer.

For example, the sparse key clip analysis policy is used to divide the candidate video into four analysis clips, which are respectively an analysis clip 1, an analysis clip 2, an analysis clip 3, and an analysis clip 4 in a chronological order. Interval duration between the analysis clip 1 and the analysis clip 2 is 1s, interval duration between the analysis clip 2 and the analysis clip 3 is 2s, and interval duration between the analysis clip 3 and the analysis clip 4 is 4s.

It should be understood that, compared with the intensive key clip analysis policy, the sparse key clip analysis policy focuses on analyzing a front or middle clip of a video, and a start point of the first analysis clip may not be the first video frame. Therefore, time consumed by using the sparse key clip analysis policy may be shorter, so that a highlight clip can be obtained faster, and a video set including the highlight clip can be generated.

For example, the I frame sampling analysis policy is a policy of selecting M frames of images from the candidate video as start frames of analysis clips, to obtain M analysis clips, and selecting one of the M analysis clips as a highlight clip. In a possible case, M frames of images refer to three frames of images.

For example, the I frame sampling analysis policy may be used to sequentially select a first frame of the candidate video, one frame at a 2nd second, and one frame of image at 1/3 of the total duration of the candidate video. That is, three frames of images are selected in total, and analysis processing is performed on the three frames of images, to obtain the highlight clip.

The one frame of image at the 2nd second may refer to a frame image at the 2nd second of the candidate video or a frame image adjacent to a frame image at the 2nd second.

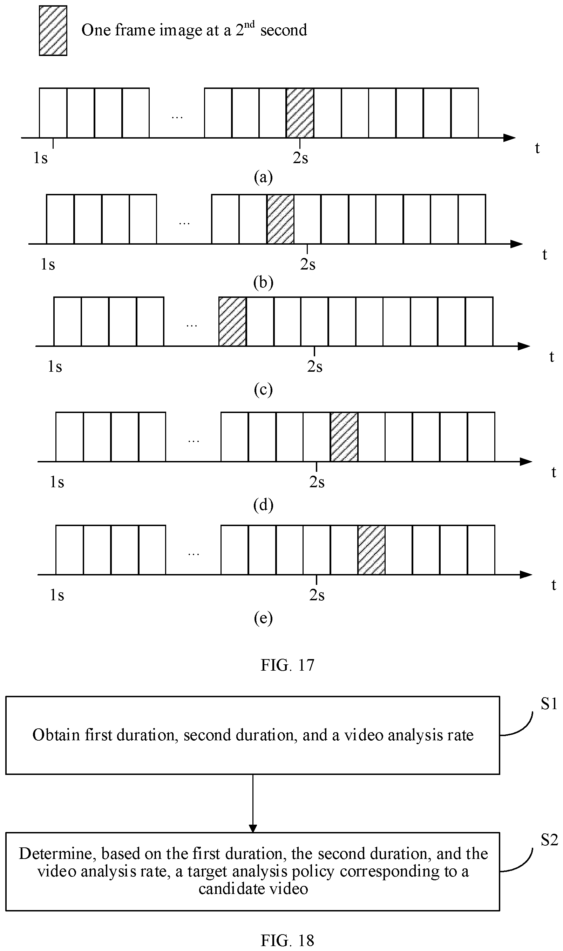

For example, as shown in (a) in FIG. 17, the one frame image at the 2nd second may refer to a frame image of a frame at the 2nd second of the candidate video.

For example, as shown in (b) in FIG. 17, the one frame image at the 2nd second may refer to a frame image one frame before the frame image of the frame at the 2nd second of the candidate video.

For example, as shown in (c) in FIG. 17, the one frame image at the 2nd second may refer to a frame image three frames before the frame image of the frame at the 2nd second of the candidate video.

For example, as shown in (d) in FIG. 17, the one frame image at the 2nd second may refer to a frame image one frame after the frame image of the frame at the 2nd second of the candidate video.

For example, as shown in (e) in FIG. 17, the one frame image at the 2nd second may refer to a frame image two frames after the frame image at the 2nd second of the candidate video.

It should be understood that, compared with the sparse key clip analysis policy, the I frame sampling analysis policy is used to perform analysis processing only on M frame images. Therefore, time consumed by using the I frame sampling analysis policy may be shorter, so that a highlight clip can be obtained faster, and a video set including the highlight clip can be generated.

The following describes in detail a specific process of how to select a target analysis policy for each candidate video through the embodiment shown in FIG. 18.

FIG. 18 is a schematic flowchart of a policy determining method for generating a video according to an embodiment of this application. As shown in FIG. 18, the method includes the following steps.

S1: Obtain first duration, second duration, and a video analysis rate.

S2: Determine, based on the first duration, the second duration, and the video analysis rate, a target analysis policy corresponding to the candidate video.

The following provides a detailed description of S1 "Obtain first duration, second duration, and a video analysis rate".

The first duration is video duration of a candidate video, and the second duration indicates analysis duration allocated to the candidate video to perform analysis processing on the candidate video.

The candidate video may refer to a video material selected by a user on the interface A3 shown in FIG. 3F, namely, a video material used to generate a one-tap blockbuster.

A video editing service layer of an application layer may send a file descriptor of the candidate video to a policy monitoring module in a media middle platform framework layer. For example, a file descriptor of a candidate video 1 is fd1, and the file descriptor sent by the video editing service layer to the policy monitoring module is fd1. After receiving the file descriptor fd1, the policy monitoring module may read, based on the file descriptor fd1, video duration, namely, first duration, corresponding to the candidate video 1.

It should be understood that, after receiving total target analysis duration sent by the video editing service layer, the policy monitoring module subtracts duration occupied by picture analysis from the total target analysis duration, to obtain total analysis duration that may be allocated to all candidate videos, and then divides, based on video duration of each candidate video, the total analysis duration into a plurality of periods of analysis duration, namely, analysis duration (second duration) allocated to each candidate video. The analysis duration allocated to each candidate video may be obtained through a duration allocation algorithm.

The following provides a detailed description of the duration allocation algorithm provided in embodiments of this application.

In a possible case, if the total target analysis duration that is sent by the video editing service layer and that is received by the policy monitoring module is 20s, where the duration occupied by the picture analysis is 2s, the total analysis duration that may be allocated to all the candidate videos is 18s. An example in which all the candidate videos are three videos is used for description. The three videos include a video 1, a video 2, and a video 3. Video duration (the first duration) of the video 1 is 15s, video duration (the first duration) of the video 2 is 10s, and video duration (the first duration) of the video 3 is 20s. The total analysis duration of 18s is allocated to each video based on the video duration of each video. The analysis duration (the second duration) of the video 1 is 6s, the analysis duration (the second duration) of the video 2 is 4s, and the analysis duration (the second duration) of the video 3 is 8s respectively.

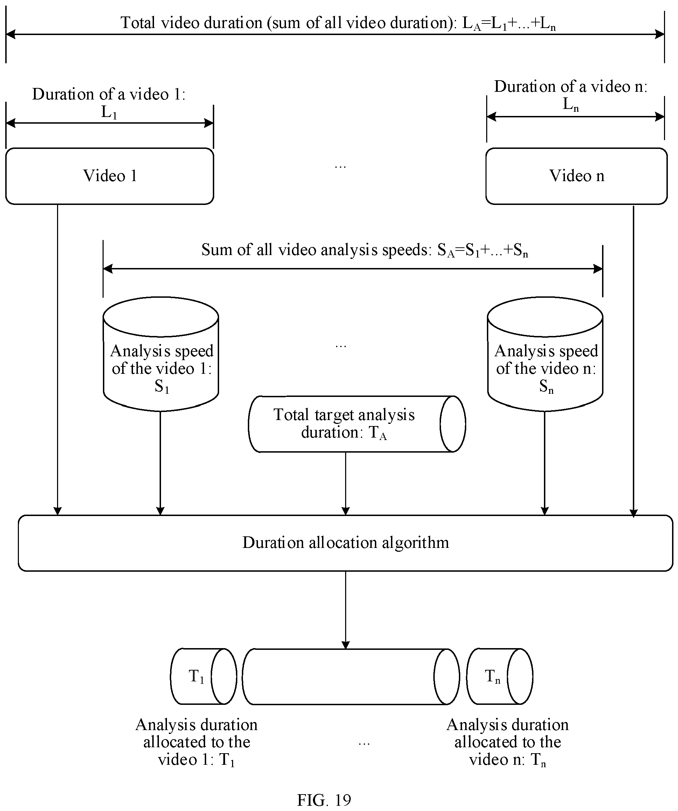

In a possible case, the actual analysis duration allocated to each video material (the candidate video) may be further obtained through the duration allocation algorithm shown in FIG. 19.

The following first describes, with reference to FIG. 19, an input parameter and an output parameter of the duration allocation algorithm, then describes logic of the duration allocation algorithm, and finally describes, by way of example, how to allocate the actual analysis duration of each video material based on the duration allocation algorithm.

Refer to FIG. 19. In embodiments of this application, for a plurality of video material files selected by a user, based on a total quantity n of video material files, duration $L_n$ of each video, a sum $L_A$ of all video duration, an analysis speed $S_n$ of each video, a sum $S_A$ of all video analysis speeds, and total target analysis duration $T_A$, calculation is performed by using a duration allocation algorithm, and actual analysis duration allocated to each video material file can be determined.

First, main input parameters of the duration allocation algorithm are described. As shown in FIG. 19, input data of the duration allocation algorithm includes the following six items.

(1) A total quantity (denoted as n) of video material files.

(2) Duration (denoted as $L_n$) of each video.
For example, duration of a first video is denoted as $L_1$, duration of a second video is denoted as $L_2$, and the rest is deduced by analogy. Duration of an nth video is $L_n$. A single video material file is parsed, so that duration of the video material file can be obtained.

(3) Total video duration (denoted as $L_A$).
The total video duration refers to a sum of all video duration, namely, $L_A = L_1 + ... + L_n$.

(4) An analysis speed of each video (denoted as $S_n$).

For example, an analysis speed of the first video is $S_1$, an analysis speed of the second video is denoted as $S_2$, and the rest is deduced by analogy. The analysis speed of the nth video is $S_n$. An analysis speed of a single video can be obtained from an HAL layer. For example, the analysis speed of the single video may be 3X, 4X, 5X, or another analysis speed.

The analysis speed of the video is related to a resolution and a frame rate of the video. For example, a higher resolution of the video indicates a lower analysis speed of the video. A higher frame rate of the video indicates a lower analysis speed of the video. Because video material files have different resolutions and frame rates, analysis speeds of the video material files may be different.

In embodiments of this application, the analysis speed of the single video ultimately depends on a video decoding speed and a chip analysis speed. In other words, the analysis speed of the single video may be determined based on the chip analysis speed and the video decoding speed. The following describes in detail a process of how to calculate the analysis speed $S_n$ of each video.

In embodiments of this application, the analysis speed $S_n$ of the single video may be calculated by using the following equation:

$$S_n = \min(V_1, V_2) \times \alpha \; ; \text{(equation 1-1)}$$

$V_1$ represents a video decoding speed (decodeSpeed), $V_2$ represents a chip analysis speed (chipestSpeed), and $\alpha$ represents a tolerance factor. An example in which $\alpha$ takes 0.9 is used. $\min(V_1, V_2)$ represents taking a smaller value of $V_1$ and $V_1$.

In embodiments of this application, the chip analysis speed $V_2$ is a performance parameter obtained from the HAL layer during initialization. For example, the chip analysis speed $V_2$ may be 3X, 4X, or 5X, which may be specifically determined based on the practical nature of the chip. For convenience of description, in embodiments of this application, an example in which the chip analysis speed $V_2$ is 5X is exemplarily described.

In embodiments of this application, based on the resolution the frame rate of the video, the video decoding speed $V_1$ is calculated based on the default video decoding speed (denoted as $V_d$). A process of calculating the video decoding speed $V_1$ is described in detail below.

First, the video decoding speed $V_1$ may be calculated based on the resolution and the frame rate of the video by using the following equation:

$$V_1 = V_d \times (R_d / R_A) \times (F_d / F_A) \; ; \text{(equation 1-2)}$$

$V_d$ represents a default video decoding speed, $R_4$ represents a default video resolution, and $R_A$ represents an actual video resolution. $F_d$ represents a default video frame rate, and $F_A$ represents an actual video frame rate.

For example, the default video decoding speed $V_d$ may take 4X, the default video resolution $R_d$ may take 1080p (namely, $1920 \times 1080$), and the default video frame rate $F_d$ may take 30 frames/second.

An example in which a video whose actual video resolution $R_A$ is 720p (namely, $1280 \times 720$) and actual video frame rate $F_A$ is 60 frames/second is exemplarily described. The foregoing parameters are substituted into the equation 1-2, to calculate the video decoding speed $V_1$:

$$V_1 = V_d \times (R_d/R_A) \times (R_d/R_A) = 4 \times (1920 \times 1080)/(1280 \times 720) \times (30/60) = 4.5$$

Therefore, the video decoding speed $V_1$ is calculated through the foregoing equation 1-2.

Next, an analysis speed $S_n$ of a single video is calculated through the foregoing equation 1-1. It is assumed that the chip analysis speed $V_2$ is 5X. Next, the video decoding speed $V_1$ and the chip analysis speed $V_2$ are substituted into the equation 1-1, to obtain a single video analysis speed $S_n$ through calculation:

$$S_n = \min (4.5, 5) \times 0.9 = 4.5 \times 0.9 \approx 4$$

It can be learned that, in the solution of this application, the analysis speed of the single video is determined based on the chip analysis speed and the video decoding speed. The video decoding speed is determined based on the resolution and the frame rate of the single video. In other words, in the solution of this application, the analysis speed of the single video is calculated based on the chip analysis speed and the resolution and the frame rate of the single video.

(5) A sum of all video analysis speeds (denoted as $S_A$).

$S_A$ is a sum of analysis speeds of all to-be-analyzed videos.

(6) Total target analysis duration (denoted as $T_A$).

The total target analysis duration $T_A$ is time taken to complete analysis of all video material files, and is specifically delivered by an application layer. First, the analysis speeds of all the video material files are calculated, the total target analysis duration $T_A$ is preliminarily calculated based on the analysis speeds of all the video material files, and then the total target analysis duration $T_A$ is allocated to all the video material files based on the duration allocation algorithm provided in embodiments of this application.

It should be noted that, in embodiments of this application, the plurality of video material files may be videos, may include one or more videos and one or more pictures, or may be pictures. For a video, an analysis speed needs to be queried. For a picture, an analysis speed does not need to be queried.

Scenario 1: The plurality of video material files include only video materials.

In some embodiments, when the plurality of video material files are videos, the total target analysis duration $T_A$ is calculated based on the following equation:

$$T_A = \sum T_{Vn} \; ; \text{(equation 2-1)}$$

$$T_{Vn} = \min(L_n / S_n, \beta) \; ; \text{(equation 2-2)}$$

$\min(L_n/S_n, \beta)$ represents taking a minimum value of $L_n/S_n$ and $\beta$. $L_n$ represents video duration of a single video, $S_n$ represents an analysis speed of the single video, and $T_{Vn}$ represents expected analysis duration of the single video in the plurality of video material files, which may be specifically obtained by calculation based on the video duration and the analysis speed. $\beta$ is an upper limit value of the expected analysis duration of the single video, so that it can be ensured that the expected analysis duration of the single video falls within a limit range. It may be understood that, during actual implementation, the upper limit value of the expected analysis duration of the single video may be set based on an actual use requirement. This is not limited in embodiments of this application.

For example, $\beta$ takes 20 seconds (s). The expected analysis duration of the single video is expressed as:

$$T_{Vn} = \min(L_n/S_n, 20s); \text{(equation 2-3)}$$

For example, video duration $L_n$ of one video is 60s, and an analysis speed $S_n$ of the video is 5X. Then, $L_n/S_n$ is 12 seconds. It can be determined based on the foregoing equation 2-3 that, the expected analysis duration $T_{Vn}$ of the video is equal to min (12s, 20s)=12s.

For another example, video duration $L_n$ of one video is 200s, and an analysis speed $S_n$ of the video is 5X. Then, $L_n/S_n$ is 40 seconds. It can be determined based on the foregoing equation 2-3 that, the expected analysis duration $T_{Vn}$ of the video is equal to min (40s, 20s)=20s.

In other words, when the plurality of video material files are videos, the total target analysis duration $T_A$ is calculated based on the sum of the expected analysis duration of all the to-be-analyzed videos. For example, it is assumed that the user selects five videos as video material files of one-tap clip formation, queries an analysis speed of each video, calculates expected analysis duration of each video based on the analysis speed of each video, and then sums expected analysis duration of the five videos, to obtain the total target analysis duration $T_A$. For example, an example in which the total target analysis duration $T_A$ is 20 seconds is used. In embodiments of this application, based on the duration allocation algorithm, 20 seconds are allocated to the five videos. Specifically, how to calculate the actual analysis duration allocated to each video is described in detail below.

Scenario 2: The plurality of video material files include video materials and picture materials.

In some other embodiments, when the plurality of video material files include one or more videos and one or more pictures, the total target analysis duration $T_A$ is calculated based on the following equation:

$$T_A = \sum T_{Vn} + \sum T_P \; ; \text{(equation 3-1)}$$

$$T_{Vn} = \min(L_n / S_n, \beta) \; ; \text{(equation 3-2)}$$

$$T_P = \gamma \; ; \text{(equation 3-3)}$$

$T_{Vn}$ represents the expected analysis duration of the single video in the plurality of video material files, $T_P$ represents the expected analysis duration of the single picture in the plurality of video material files, and $\gamma$ is a preset value. A value of $\gamma$ may be determined based on an actual use requirement. This is not limited in embodiments of this application. For example, the value of $\gamma$ is 1, which represents that the expected analysis duration of the single picture is 1 second. The following provides a description by using an example in which the expected analysis duration of the single picture is 1 second.

Assuming that the plurality of video material files include n videos and m pictures, a sum of expected analysis duration of the m pictures is m. Correspondingly, the total target analysis duration $T_A$ may be calculated based on the following equation:

$$T_A = \sum \min(L_n / S_n, \beta) + m \; ; \text{(equation 3-4)}$$

It can be learned that, when the plurality of video material files include videos and pictures, a sum of expected analysis duration of all videos is added to a sum of expected analysis duration of all pictures, to obtain the total target analysis duration $T_A$.

It should be noted that, in embodiments of this application, the expected analysis duration of each picture may be fixed duration, that is, the expected analysis duration allocated to each picture is fixed. The expected analysis duration of each picture may be specifically set based on an actual use requirement. This is not limited in embodiments of this application. For example, the expected analysis duration of each picture is one second. In this case, the highlight clip analysis algorithm is used to perform, by taking one second, highlight analysis on each picture to determine whether the picture includes a highlight moment (also referred to as a brilliant moment).

In embodiments of this application, the total target analysis duration $T_A$ obtained by calculation is duration during which all video material files are analyzed by using the highlight clip analysis algorithm. The actual analysis duration allocated to each video in all the video material files needs to be calculated again based on the duration allocation algorithm. It is assumed that the actual analysis duration allocated to a specific video is 10 seconds. In this case, the highlight clip analysis algorithm performs, by taking 10 seconds, highlight analysis on the video, to determine highlight clips (also referred to as brilliant clips) in the video, and then the highlight clips in the video are intercepted as video clip content of one-tap clip formation.

Input parameters of the duration allocation algorithm are described above with reference to FIG. 19. Still refer to FIG. 19, output data of the duration allocation algorithm is: the actual analysis duration (denoted as $T_n$) allocated to each video material file. For example, the actual analysis duration allocated to the first video material file is $T_1$, the actual analysis duration allocated to the second video material file is $T_1$, and the rest is deduced by analogy. The actual analysis duration allocated to the $n^{th}$ video material file is $T_n$.

An input parameter and an output parameter of the duration allocation algorithm are described above with reference to FIG. 19. The following describes in detail an algorithm rule of the duration allocation algorithm in embodiments of this application, and a process of how to calculate the actual analysis duration $T_n$ of each video material file based on the duration allocation algorithm.

In embodiments of this application, a general idea of the duration allocation algorithm may be: dividing expected analysis duration (denoted as $T_V$) of all videos into two parts for allocation. First, one part of the expected analysis duration is evenly allocated to each video, and the part of duration is referred to as basic analysis duration. The other part of the expected analysis duration is allocated based on a weight ratio corresponding to the video, and the part of duration is referred to as weight-based analysis duration. In other words, the actual analysis duration allocated to the single video material file includes the following two parts:

$$T_n = T_{n1} + T_{n2} \text{ ; (equation 4-1)}$$

$T_{n1}$ represents the basic analysis duration, and $T_{n2}$ represents the weight-based analysis duration.

It should be noted that, when the plurality of video material files are videos, to-be-allocated video duration $T_V$ is the total target analysis duration $T_A$ in the foregoing scenario 1. When the plurality of video material files include videos and pictures, the to-be-allocated video duration $T_V$ is a sum $\Sigma T_{Vn}$ of the expected analysis duration of all the videos in the foregoing scenario 2.

Optionally, a part of the to-be-allocated video duration at a preset ratio may be evenly allocated to each video, and a remaining part of the to-be-allocated video duration is allocated to each video based on a weight ratio corresponding to the video. The preset ratio may be set based on an actual usage requirement. This is not limited in embodiments of the application. For example, the preset ratio is 50%. That is, 50% of the to-be-allocated video duration is evenly allocated to each video, and then the other 50% of the to-be-allocated video duration is allocated to each video based on the weight ratio.

The basic analysis duration $T_{n1}$ is calculated through the following equation:

$$T_{n1} = T_V \times 0.5 / n \text{ ; (equation 4-2)}$$

n represents a quantity of to-be-analyzed videos.

The weight-based analysis duration $T_{n2}$ is calculated through the following equation:

$$T_{n2} = T_V \times 0.5 \times (W_n / W_A) \text{ ; (equation 4-3)}$$

$$W_n = \log_2(1.5 + L_n / L_A) / \log_2(1.5 + S_n / S_A) \text{ ; (equation 4-4)}$$

$$W_A = W_1 + ... + W_n \text{ ; (equation 4-5)}$$

$W_n$ represents a weight value of a single video, for example, $W_1$ represents a weight of the first video, $W_2$ represents a weight of the second video, and the rest is deduced by analogy. $W_n$ represents a weight of the $n^{th}$ video. $W_A$ represents a sum of weight values of all videos. It should be noted that, 1.5 in the equation 4-4 is a preset value of the algorithm, which may be set based on an actual usage requirement. This is not limited in embodiments of the application.

In embodiments of this application, longer actual analysis duration should be allocated to a video material file with longer duration In other words, a greater ratio $L_n/L_A$ of a video length $L_n$ of a specific video to a sum $L_A$ of all video duration indicates longer actual analysis duration allocated to the video.

In embodiments of this application, shorter actual analysis duration should be allocated to a video material file with a faster analysis speed. In other words, a greater ratio $S_n/S_A$ of a video analysis speed $S_n$ of a specific video to a sum $S_A$ of all video analysis speeds indicates shorter actual analysis duration allocated to the video.

A weight value $W_n$ of a single video is specifically calculated through the foregoing equation 4-4.

For example, an example in which the plurality of video material files include two videos is used for exemplary description. A sum $L_A$ of all video duration is 200 seconds, and a sum $S_A$ of all video analysis speeds is 10X. It is assumed that to-be-allocated video duration $T_V$ is 20 seconds.

It is assumed that a video length $L_1$ of the first video is 60 seconds, an analysis speed $S_1$ of the video is 5X, and a weight value $W_1$ of the first video may be calculated through the foregoing equation 4-4:

$$W_1 = \log_2(1.5 + L_1/L_A)/\log_2(1.5 + S_1/S_A) = \log_2(1.5 + 60/200)/\log_2(1.5 + 5/10) = 0.85$$

It is assumed that a video length $L_2$ of the second video is 140 seconds, and an analysis speed $S_2$ of the video is 5X. A weight value $W_2$ of the second video may be calculated through the foregoing equation 4-4:

$$W_2 = \log_2(1.5 + L_2/L_A)/\log_2(1.5 + S_2/S_A) = \log_2(1.5 + 140/200)/\log_2(1.5 + 5/10) = 1.14$$

A sum $W_A$ of weight values of all videos may be calculated through the foregoing equation 4-5 and is equal to 1.99.

The weight-based analysis duration $T_{n2}$ of the first video is calculated through the foregoing equation 4-3:

$$T_{n2} = T_V \times 0.5 \times (W_1 / W_A) = 20 \times 0.5 \times (0.85 / 1.99) = 4$$

The basic analysis duration $T_{n1}$ of the first video is calculated through the foregoing equation 4-2:

$$T_{n1} = T_V \times 0.5 / n = 20 \times 0.5 / 2 = 5$$

Then, the actual analysis duration $T_1$ allocated to the first video is calculated through the foregoing equation 4-1:

$$T_n = T_{n1} + T_{n2} = 4 + 5 = 9$$

It may be understood that, in other words, the actual analysis duration $T_1$ allocated to the first video is 9 seconds. Because the to-be-allocated video duration $T_V$ is 20 seconds, the actual analysis duration allocated to the second video is 20-9=11 seconds.

It should be noted that, an example in which duration allocation is performed on two videos based on the duration allocation algorithm is used for exemplary description. It may be understood that, during actual implementation, for a case that the user selects three or more videos, in this application, duration allocation may be performed on a large quantity of videos based on the foregoing duration allocation algorithm, to allocate proper actual analysis duration to each video.

It should be understood that, in an initialization process, an algorithm module of an HAL layer returns a video analysis rate to a video editing service layer of an application layer. Therefore, the video editing service layer of the application layer may send the video analysis rate to a policy monitoring module in a media middle platform framework layer. The video analysis rate is a performance parameter of an electronic device, and is usually fixed.

S2 "Determine, based on the first duration, the second duration, and the video analysis rate, a target analysis policy corresponding to the candidate video" is described in detail below.

In a possible case, after the policy monitoring module of the media middle platform framework layer obtains the first duration, the second duration, and the video analysis rate, a percentage of frame images in the candidate video that can be processed within analysis duration allocated to each candidate video is determined based on the first duration, the second duration, and the video analysis rate, and then a target analysis policy of each candidate video is determined based on the percentage.

For example, after the video duration (the first duration) of the candidate video obtained by the policy monitoring module is 10s, the analysis duration (the second duration) allocated to the candidate video is 1s, and the video processing rate is 5, analysis duration required for analyzing all the frame images in the candidate video may be obtained based on the video duration and the video processing rate of the candidate video. For example, the analysis duration required for analyzing all the frame images in the candidate video is the video duration of the candidate video divided by the video processing rate, that is, 10s/5=2s. The analysis duration allocated to the candidate video is 1s. In this way, this means that a percentage of the candidate video that can be analyzed within the analysis duration allocated to the candidate video is 1 s/2s=50%.

Optionally, when a percentage of frame images in the candidate video that can be processed within the analysis duration allocated to the candidate video is greater than a first preset threshold, a target analysis policy allocated to the candidate video is a full analysis policy. For example, the first preset threshold is 100%.

For example, the analysis duration allocated to the candidate video is 2.2s, and the analysis duration required for analyzing all the frame images in the candidate video is 2s. In this case, a percentage of the frame images in the candidate video that can be processed within the analysis duration allocated to the candidate video is 2.2/2=110%, which is greater than the first preset threshold of 100%. Therefore, the target analysis policy allocated to the candidate video is the full analysis policy.

Optionally, when a percentage of the frame images in the candidate video that can be processed within the analysis duration allocated to the candidate video is greater than a second preset threshold and is less than the first preset threshold, the target analysis policy allocated to the candidate video is an intensive key clip analysis policy. The second preset threshold is less than the first preset threshold. For example, the first preset threshold is 100%, and the second preset threshold is 60%.

For example, the analysis duration allocated to the candidate video is 1.6s, and the analysis duration required for analyzing all the frame images of the candidate video is 2s. In this case, the percentage of the frame images in the candidate video that can be processed within the analysis duration allocated to the candidate video is 1.6/2=80%, is less than the first preset threshold of 100%, and is greater than the second preset threshold of 60%. Therefore, the target analysis policy allocated to the candidate video is the intensive key clip analysis policy.

Optionally, when a percentage of the frame images in the candidate video that can be processed within the analysis duration allocated to the candidate video is greater than a third preset threshold and is less than the second preset threshold, the target analysis policy allocated to the candidate video is a sparse key clip analysis policy. The third preset threshold is less than the second preset threshold. For example, the third preset threshold may be a percentage obtained based on shortest highlight duration. The shortest highlight duration may refer to shortest duration required for generating a highlight clip, and the third preset threshold may be a percentage obtained by dividing the shortest highlight duration by the video duration of the candidate video. The second preset threshold may be 60%.

For example, the shortest highlight duration t0 may be obtained based on the following formula:

$$t0=\min((t3+t1*1.2)/v, (t3+t2*0.5)/v)$$

t0 refers to the shortest highlight duration, t3 refers to analysis duration of a minimum quantity of frame images required for a highlight frequency, t1 refers to a minimum value of duration of a highlight clip, and t2 refers to a maximum value of duration of a highlight clip. v refers to a video analysis rate.

For example, at least three frames of images are usually required to generate a highlight clip. Therefore, at least three frames of images need to be analyzed to obtain a highlight frequency. In a possible case, duration t3 required for computing performance of the terminal device to analyze three frames of images is 0.2s. The terminal device usually sets a duration range of the highlight clip, including a minimum value and a maximum value of the duration of the highlight clip. For example, a duration range of the highlight frequency set by the terminal device is 1s to 2s. In other words, a minimum value t1 of the duration of the highlight clip is 1s, and a maximum value t2 of the highlight clip is 2s. The video analysis rate is 5. Therefore, the shortest highlight duration t0=min ((0.2+1 *1.2)/5, (0.2+2*0.5)/5)=min (0.44, 0.6)=0.44s can be obtained based on the foregoing formula. The third preset threshold may be 0.44/2=22%.

For example, the analysis duration allocated to the candidate video is 1s, and the analysis duration required for analyzing all the frame images in the candidate video is 2s. In this case, the percentage of the frame images in the candidate video that can be processed within the analysis duration allocated to the candidate video is 1/2=50%, is less than the second preset threshold of 60%, and is greater than the third preset threshold of 22%. Therefore, the target analysis policy allocated to the candidate video is the intensive key clip analysis policy.

Optionally, when a percentage of the frame images in the candidate video that can be processed during the analysis duration allocated to the candidate video is less than the third preset threshold, the target analysis policy allocated to the candidate video is an I frame sampling analysis policy. The third preset threshold may be a percentage obtained based on the shortest highlight duration.

For example, the analysis duration allocated to the candidate video is 0.4s, and the analysis duration required for analyzing all the frame images in the candidate video is 2s. In this case, a percentage of the frame images in the candidate video that can be processed within the analysis duration allocated to the candidate video is 0.4/2=20%, which is less than the third preset threshold of 22%. Therefore, the target analysis policy allocated to the candidate video is the I frame sampling analysis policy.

In a possible case, the target analysis policy of each candidate video may also be directly determined based on the analysis duration (the second duration) allocated to the candidate video and the analysis duration required for analyzing all the frame images in the candidate video. The analysis duration required for analyzing all the frame images in the candidate video may be obtained through the video duration (the first duration) and the video processing rate of the candidate video.

For example, after the video duration (the first duration) of the candidate video obtained by the policy monitoring module is 10s, the analysis duration (the second duration) allocated to the candidate video is 1s, and the video processing rate is 5, the analysis duration required for analyzing all the frame images in the candidate video may be obtained by dividing the video duration of 10s of the candidate video by the video processing rate of 5 as 10/5=2s. Then, the analysis duration allocated to the candidate video is compared with the analysis duration required for analyzing all the frame images in the candidate video, to determine the target analysis policy of the candidate video.

Optionally, when the analysis duration allocated to the candidate video is greater than the analysis duration required for analyzing all the frame images in the candidate video, the target analysis policy allocated to the candidate video is the full analysis policy.

For example, the analysis duration allocated to the candidate video is 2.2s, and the analysis duration required for analyzing all the frame images in the candidate video is 2s. In this case, the target analysis policy allocated to the candidate video is the full analysis policy.

Optionally, when the analysis duration allocated to the candidate video is less than the analysis duration required for analyzing all the frame images in the candidate video and is greater than a product of the analysis duration required for analyzing all the frame images in the candidate video and the fourth preset threshold, the target analysis policy allocated to the candidate video is the intensive key clip analysis policy.

For example, the analysis duration allocated to the candidate video is 1.6s, the fourth preset threshold is 60%, the analysis duration required for analyzing all the frame images in the candidate video is 2s, the analysis duration of 1.6s that is allocated to the candidate video is less than the analysis duration of 2s that is required for analyzing all the frame images in the candidate video, and is greater than a product (2*60%=1.2s) of the analysis duration of 2s that is required for analyzing all the frame images in the candidate video and 60% of the fourth preset threshold. In this case, the target analysis policy allocated to the candidate video is the intensive key clip analysis policy.

Optionally, when the analysis duration allocated to the candidate video is less than a product of the analysis duration required for analyzing all the frame images in the candidate video and the fourth preset threshold, and is greater than a fifth preset threshold, the target analysis policy allocated to the candidate video is the sparse key clip analysis policy. The fifth preset threshold may refer to the shortest highlight duration.

For example, the shortest highlight duration t0 may be obtained based on the following formula:

$$t0=min((t3+t1*1.2)/v, (t3+t2*0.5)/v)$$

t0 refers to the shortest highlight duration, t3 refers to analysis duration of a minimum quantity of frame images required for a highlight frequency, t1 refers to a minimum value of duration of a highlight clip, and t2 refers to a maximum value of duration of a highlight clip. v may refer to a video analysis rate.

For example, at least three frames of images are usually required to generate a highlight clip. Therefore, at least three frames of images need to be analyzed to obtain a highlight frequency. In a possible case, duration t3 required for computing performance of the terminal device to analyze three frames of images is 0.2s. The terminal device usually sets a duration range of the highlight clip, including a minimum value and a maximum value of the duration of the highlight clip. For example, a duration range of the highlight frequency set by the terminal device is 1s to 2s. In other words, a minimum value t1 of the duration of the highlight clip is 1s, and a maximum value t2 of the highlight clip is 2s. The video analysis rate is 5. Therefore, the shortest highlight duration t0=min ((0.2+1*1.2)/5, (0.2+2*0.5)/5)=min (0.44, 0.6)=0.44s can be obtained based on the foregoing formula. That is, the fifth preset threshold is 0.44s.

For example, the analysis duration allocated to the candidate video is 1s, the analysis duration required for analyzing all the frame images in the candidate video is 2s, the fourth preset threshold is 60%, and the fifth preset threshold is 0.44s. The analysis duration of 1s that is allocated to the candidate video is less than the product (2*60%=1.2s) of the analysis duration of 2s that is required for analyzing all the frame images in the candidate video and the fourth preset threshold of 60%, and is greater than the fifth preset threshold of 0.44. In this case, the target analysis policy allocated to the candidate video is the I frame sampling analysis policy.

Optionally, when the analysis duration allocated to the candidate video is less than the fifth preset threshold, the target analysis policy allocated to the candidate video is the sparse key clip analysis policy. The fifth preset threshold may refer to the shortest highlight duration.

For example, the analysis duration allocated to the candidate video is 0.4s, the fifth preset threshold is 0.44s, and the analysis duration of 0.4s that is allocated to the candidate video is less than the fifth preset threshold of 0.44s. Therefore, the target analysis policy allocated to the candidate video is the I frame sampling analysis policy.

The following describes a specific process of step 300 "Generate a target video based on the analysis results of the plurality of to-be-selected videos".

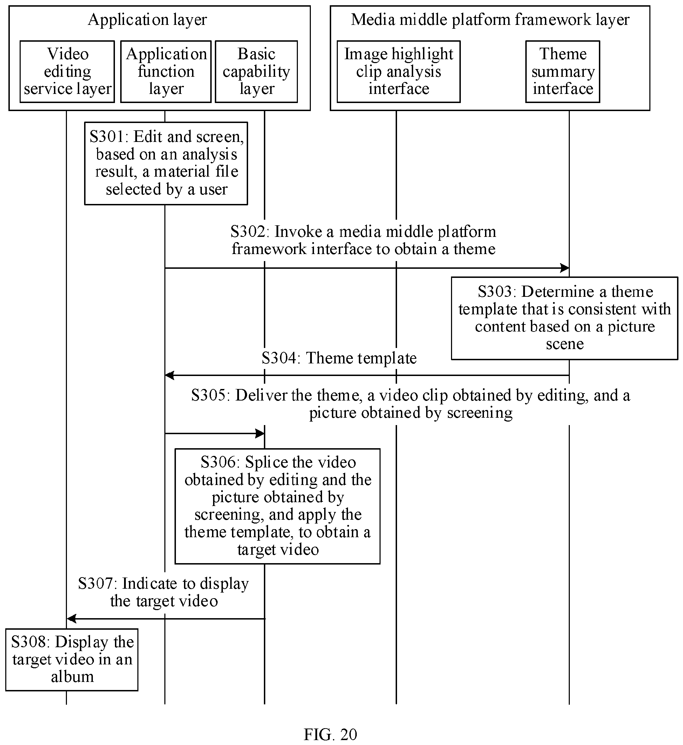

The generating a target video based on the analysis results of the plurality of to-be-selected videos may be as shown in FIG. 20, and includes the following steps.

S301: An application function layer in an application layer edits and screens, based on an analysis result, a material file selected by a user.

The material file selected by the user includes a candidate video and a picture.

S302: The application function layer invokes a theme summary interface in a media middle platform framework layer to obtain a theme.

S303: The theme summary interface is configured to determine, based on a picture scene, a theme template that is consistent with content.

S304: The theme summary interface is configured to send the theme template to the application function layer.

S305: The application function layer delivers a theme, a video clip obtained by editing, and a picture obtained by screening to a basic capability layer in the application layer.

S306: The basic capability layer splices the video obtained by editing and the picture obtained by screening, and applies the theme template, to obtain a target video.

S307: The basic capability layer indicates a video editing service layer to display the target video.

S308: The video editing service layer displays the target video in an album.

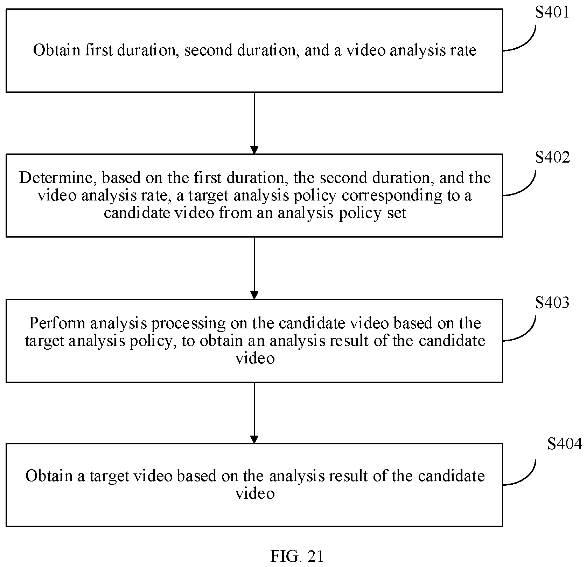

In an embodiment of this application, as shown in FIG. 21, a policy determining method for generating a video is provided, where the method is applied to an electronic device, and the method includes the following steps.

S401: Obtain first duration, second duration, and a video analysis rate.

The first duration is video duration of a candidate video, and the second duration indicates analysis duration allocated to the candidate video to perform analysis processing.

S402: Determine, based on the first duration, the second duration, and the video analysis rate, a target analysis policy corresponding to the candidate video from an analysis policy set.

The analysis policy set includes at least two analysis policies, and duration required for performing analysis processing on the candidate video by using different analysis policies is different.

S403: Perform analysis processing on the candidate video based on the target analysis policy, to obtain an analysis result of the candidate video.

S404: Obtain a target video based on the analysis result of the candidate video.

In embodiments of this application, the first duration, the second duration, and the video analysis rate are obtained, the target analysis policy corresponding to the candidate video is determined, based on the first duration, the second duration, and the video analysis rate, from the analysis policy set, analysis processing is performed on a to-be-selected video based on the target analysis policy, to obtain analysis results of to-be-selected videos, and finally, the target video is generated based on the analysis results of the plurality of to-be-selected videos. The first duration is video duration of the candidate video, and the second duration indicates analysis duration allocated to the candidate video to perform analysis processing on the candidate video. The analysis policy set includes at least two analysis policies, and duration required for performing analysis processing on the candidate video by using different analysis policies is different. In other words, through the video duration of the candidate video, the analysis duration allocated to the candidate video to perform analysis processing, and the video analysis rate at which the electronic device analyzes the video, the target analysis policy corresponding to the candidate video is determined from a plurality of analysis policies. Analysis processing performed on the candidate video takes shorter duration than analysis processing performed on all the frame images in the candidate video in the related art. Therefore, the analysis result of the candidate video can be obtained faster, and the target video can be obtained faster, thereby improving user experience.

In an embodiment of this application, as shown in FIG. 22, a policy determining method for generating a video is provided, where the method is applied to an electronic device, and the method includes the following steps.

S501: Display a first interface, where the first interface includes a first control.

The first control is configured to generate a target video. For example, the first control may be a "one-tap blockbuster" control.

S502: Display a second interface in response to a first operation on the first control.

The second interface is configured to display a plurality of videos and/or pictures.

S503: Determine a candidate video in response to a second operation on the second interface.

The second operation is configured for selecting the candidate video from the plurality of videos and/or pictures.

S504: Obtain first duration, second duration, and a video analysis rate.

The first duration is video duration of a candidate video, and the second duration indicates analysis duration allocated to the candidate video to perform analysis processing.

S505: Determine, based on the first duration, the second duration, and the video analysis rate, a target analysis policy corresponding to the candidate video from an analysis policy set.

The analysis policy set includes at least two analysis policies, and duration required for performing analysis processing on the candidate video by using different analysis policies is different.

S506: Perform analysis processing on the candidate video based on the target analysis policy, to obtain an analysis result of the candidate video.

S507: Obtain a target video based on the analysis result of the candidate video.

Although the steps in the flowcharts of the embodiments are displayed sequentially according to instructions of arrows, these steps are not necessarily performed sequentially according to a sequence instructed by the arrows. Unless clearly specified in this specification, there is no strict sequence limitation on the execution of the operations, and the operations may be performed in another sequence. Moreover, at least some of the steps in the flowchart may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages of the another step.

It should be understood that, the foregoing examples are provided to help a person skilled in the art understand embodiments of this application, but are not intended to limit embodiments of this application to specific numerical values or specific scenes illustrated. A person skilled in the art may obviously perform various equivalent modifications or changes based on the foregoing examples, and such modifications or changes also fall within the scope of embodiments of this application.

The foregoing provides a detailed description of the policy determining method for generating a video provided in embodiments of this application with reference to FIG. 1 to o FIG. 22. The apparatus embodiment of this application will be described in detail below with reference to FIG. 2. It should be understood that, the apparatus in embodiments of this application may perform various methods in embodiments of this application. In other words, for a specific operating process of the following various products, refer to corresponding processes in the method embodiments.

FIG. 2 is a schematic diagram of a structure of an electronic device according to an embodiment of this application. The electronic device includes a policy monitoring module, an algorithm module, and a basic capability layer.

The policy monitoring module is configured to obtain first duration, second duration, and a video analysis rate, where the first duration is video duration of a candidate video, and the second duration indicates analysis duration allocated to the candidate video to perform analysis processing;

> the policy monitoring module is configured to determine, based on the first duration, the second duration, and the video analysis rate, a target analysis policy corresponding to the candidate video from an analysis policy set, where the analysis policy set includes at least two analysis policies, and duration required for performing analysis processing on the candidate video by using different analysis policies is different;
> the algorithm module is configured to perform analysis processing on the candidate video based on the target analysis policy, to obtain an analysis result of the candidate video; and
> the basic capability layer is configured to obtain a target video based on the analysis result of the candidate video.

It should be understood that, different analysis policies of the at least two analysis policies are to select all or some frame images from the candidate video to perform analysis processing. Therefore, analysis processing performed on the candidate video by using the at least two analysis policies takes shorter duration than analysis processing performed on all the frame images in the candidate video in the conventional method.

In an embodiment, the policy monitoring module is configured to determine a first ratio based on the first duration, the second duration, and the video analysis rate, where the first ratio indicates a percentage of a frame image that completes analysis processing in the candidate video within the second duration to all frame images in the candidate video; and determine the target analysis policy based on the first ratio.

In an embodiment, the policy monitoring module is configured to determine third duration based on the first duration and the video analysis rate, where the third duration indicates duration required for completing analysis processing on all frame images in the candidate video; and determine the target analysis policy corresponding to the candidate video based on the third duration and the second duration.

In an embodiment, the at least two analysis policies include a full analysis policy, an intensive key clip analysis policy, a sparse key frequency analysis policy, and an I frame sampling analysis policy.

In an embodiment, the full analysis policy is a policy of performing analysis processing on a frame image of each frame in the candidate video.

It should be understood that, because the full analysis policy is a policy of performing analysis processing on a frame image of each frame in the candidate video, the duration occupied for performing analysis processing on the candidate video by using the full analysis policy is the longest.

In an embodiment, the intensive key clip analysis policy is a policy of dividing the candidate video into N analysis clips with same interval duration, and performing analysis processing on the N analysis clips, where N is a positive integer greater than 0.

It should be understood that, compared with a case that the full analysis policy is used to perform decoding, resolution reduction, and scoring on all video frames, the intensive key clip analysis policy only needs to be used to perform decoding, resolution reduction, and scoring on video frames of several key clips. Therefore, duration occupied by performing analysis processing on the candidate video by using the intensive key clip analysis policy is shorter than duration occupied by performing analysis processing on the candidate video by using the full analysis policy.

In an embodiment, the sparse key clip analysis policy is a policy of dividing the candidate video into N analysis clips and performing analysis processing on the N analysis clips, where interval duration between the N analysis clips is different.

It should be understood that, compared with the intensive key clip analysis policy, the sparse key clip analysis policy focuses on analyzing a front or middle clip of a video, and a start point of the first analysis clip may not be the first video frame. Therefore, time consumed by the sparse key clip analysis policy may be shorter.

In an embodiment, the I frame sampling analysis policy is a policy of selecting M frames of images from the candidate video as start frames of analysis clips, to obtain M analysis clips, and selecting one of the M analysis clips as a highlight clip, where M is a positive integer greater than 0.

It should be noted that the electronic device is embodied in the form of a functional module. The term "module" may be implemented in the form of software and/or hardware, and is not specifically limited.

For example, the "module" may be a software program, a hardware circuit, or a combination of the two that implements the foregoing functions. The hardware circuit may include an application specific integrated circuit (application specific integrated circuit, ASIC), an electronic circuit, a processor (such as shared processor, a dedicated processor, or a group processor) and a memory that are configured to execute one or more software or firmware programs, a merged logic circuit, and/or other suitable components to support the described function.

Therefore, the units of each example described in embodiments of this application may be implemented by electronic hardware, or a combination of computer software and electronic hardware. Whether the functions are performed by hardware or software depends on particular applications and design constraints of the technical solutions. A person skilled in the art may use different methods to implement the described functions of each particular application, but it does not be considered that the implementation goes beyond the scope of this application.

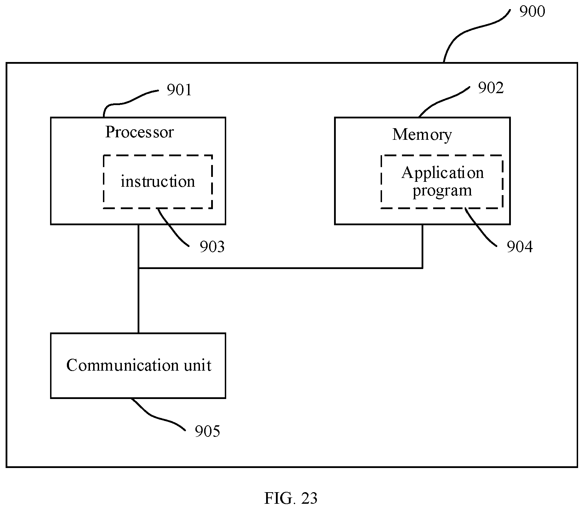

FIG. 23 is a schematic diagram of a structure of an electronic device according to this application. A dotted line in FIG. 23 indicates that the unit or the module is optional. The electronic device 900 may be configured to implement the policy determining method for generating a video described in the foregoing method embodiments.

The electronic device 900 includes one or more processors 901, and the one or more processors 901 may support the electronic device 900 in implementing the policy determining method for generating a video in the method embodiments. The processor 901 may be a general-purpose processor, a dedicated processor, or the like. For example, the processor 901 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like.

Optionally, the processor 901 may be configured to control the electronic device 900, execute a software program, process data of the software program, and the like. The electronic device 900 may further include a communication unit 905, configured to implement input (receiving) and output (sending) of signals.

For example, the electronic device 900 may be a chip, and the communication unit 905 may be an input and/or output circuit of the chip, or the communication unit 905 may be a communication interface of the chip. The chip may be used as a component of a terminal device or another electronic device.

For another example, the electronic device 900 may be a terminal device, and the communication unit 905 may be a transceiver of the terminal device, or the communication unit 905 may 900 may include one or more memories 902, storing a program 904. The program 904 may be run by the processor 901, to generate instructions 903, enabling the processor 901 to perform, based on the instructions 903, the policy determining method for generating a video in the method embodiment.

Optionally, the memory 902 may further store data.

Optionally, the processor 901 may further read the data stored in the memory 902. The data and the program 904 may be stored at the same storage address, or the data and the program 904 may be stored at different storage addresses.

Optionally, the processor 901 and the memory 902 may be separately arranged or jointly integrated, for example, on a system-on-chip (system-on-chip, SOC) of the terminal device.

For example, the memory 902 may be configured to store a related program 904 of the policy determining method for generating a video provided in embodiments of this application. The processor 901 may be configured to invoke the related program 904 of the policy determining method for generating a video stored in the memory 902 when performing the policy determining method for generating a video, and perform the policy determining method for generating a video according to embodiments of this application. For example, first duration, second duration, and a video analysis rate are obtained, where the first duration is video duration of a candidate video, and the second duration indicates analysis duration allocated to the candidate video to perform analysis processing; a target analysis policy corresponding to the candidate video is determined, based on the first duration, the second duration, and the video analysis rate, from an analysis policy set, where the analysis policy set includes at least two analysis policies, and duration required for performing analysis processing on the candidate video by using different analysis policies is different; analysis processing is performed on the candidate video based on the target analysis policy, to obtain an analysis result of the candidate video; and a target video is obtained based on the analysis result of the candidate video.

Optionally, this application further provides a computer program product. When the computer program product is performed by the processor 901, the policy determining method for generating a video of any method embodiment in this application is implemented.

For example, the computer program product may be stored in a memory 902, such as a program 904. The program 904 is finally converted into an executable target file that may be performed by the processor 901 through processing processes such as preprocessing, compilation, assembly, and linking.

Optionally, this application further provides a computer-readable storage medium. The computer-readable medium stores a computer program. When the computer program is executed by a computer, the policy determining method for generating a video described in any method embodiment of this application is implemented. The computer program may be a high-level language program or an executable object program.

For example, the computer-readable storage medium is, for example, a memory 902. The memory 902 may be a volatile memory or a non-volatile memory, or the memory 902 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it does not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described embodiments of the electronic device are merely examples. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, each functional unit in embodiments of this application may be integrated into one processing unit, or each of the units may exist alone physically, or two or more units are integrated into one unit.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, a protection scope of this application should be subject to a protection scope of the claims. In short, the foregoing descriptions are merely example embodiments of this application and are not intended to limit the protection scope of this application. Any modification, equivalent replacement, or improvement made without departing from the spirit and principle of this application shall fall within the protection scope of this application.

**Claims**

1. A policy determining method for generating a video, wherein the method is applied to an electronic device, and the method comprises:

   obtaining first duration, second duration, and a video analysis rate, wherein the first duration is video duration of a candidate video, and the second duration indicates analysis duration allocated to the candidate video to perform analysis processing;
   determining, based on the first duration, the second duration, and the video analysis rate, a target analysis policy corresponding to the candidate video from an analysis policy set, wherein the analysis policy set comprises at least two analysis policies, and duration required for performing analysis processing on the candidate video by using different analysis policies is different;
   performing analysis processing on the candidate video based on the target analysis policy, to obtain an analysis result of the candidate video; and
   obtaining a target video based on the analysis result of the candidate video.

2. The method according to claim 1, wherein the determining, based on the first duration, the second duration, and the video analysis rate, a target analysis policy corresponding to the candidate video from an analysis policy set comprises:

   determining a first ratio based on the first duration, the second duration, and the video analysis rate, wherein the first ratio indicates a percentage of a frame image that completes analysis processing in the candidate video within the second duration to all frame images in the candidate video; and
   determining the target analysis policy based on the first ratio.

3. The method according to claim 1, wherein the determining, based on the first duration, the second duration, and the video analysis rate, a target analysis policy corresponding to the candidate video from an analysis policy set comprises:

   determining third duration based on the first duration and the video analysis rate, wherein the third duration indicates duration required for completing analysis processing on all frame images in the candidate video; and
   determining the target analysis policy corresponding to the candidate video based on the third duration and the second duration.

4. The method according to any one of claims 1 to 3, wherein the at least two analysis policies comprise a full analysis policy, an intensive key clip analysis policy, a sparse key frequency analysis policy, and an I frame sampling analysis policy.

5. The method according to claim 4, wherein the full analysis policy is a policy of performing analysis processing on a frame image of each frame in the candidate video.

6. The method according to claim 4, wherein the intensive key clip analysis policy is a policy of dividing the candidate video into N analysis clips with same interval duration, and performing analysis processing on the N analysis clips, wherein N is a positive integer greater than 0.

7. The method according to claim 4, wherein the sparse key clip analysis policy is a policy of dividing the candidate video into N analysis clips and performing analysis processing on the N analysis clips, wherein interval duration between the N analysis clips is different.

8. The method according to claim 4, wherein the I frame sampling analysis policy is a policy of selecting M frames of images from the candidate video as start frames of analysis clips, to obtain M analysis clips, and selecting one of the M analysis clips as a highlight clip, wherein M is a positive integer greater than 0.

9. The method according to any one of claims 1 to 8, further comprising:

displaying a first interface, wherein the first interface comprises a first control, and the first control is configured to generate the target video;
displaying a second interface in response to a first operation on the first control, wherein the second interface is configured to display a plurality of videos and/or pictures; and
determining the candidate video in response to a second operation on the second interface, wherein the second operation is configured for selecting the candidate video from the plurality of videos and/or pictures.

10. A policy determining method for generating a video, wherein the method is applied to an electronic device, and the electronic device comprises: a policy monitoring module, an algorithm module, and a basic capability layer, wherein the policy monitoring module is respectively connected to the algorithm module and the basic capability layer, and the method comprises:

the policy monitoring module, configured to obtain first duration, second duration, and a video analysis rate, wherein the first duration is video duration of a candidate video, and the second duration indicates analysis duration allocated to the candidate video to perform analysis processing;
the policy monitoring module, configured to determine, based on the first duration, the second duration, and the video analysis rate, a target analysis policy corresponding to the candidate video from an analysis policy set, wherein the analysis policy set comprises at least two analysis policies, and duration required for performing analysis processing on the candidate video by using different analysis policies is different;
the algorithm module, configured to perform analysis processing on the candidate video based on the target analysis policy, to obtain an analysis result of the candidate video; and
the basic capability layer, configured to obtain a target video based on the analysis result of the candidate video.

11. The method according to claim 10, wherein the policy monitoring module is configured to determine a first ratio based on the first duration, the second duration, and the video analysis rate, wherein the first ratio indicates a percentage of a frame image that completes analysis processing in the candidate video within the second duration to all frame images in the candidate video; and determine the target analysis policy based on the first ratio.

12. The method according to claim 10, wherein the policy monitoring module is configured to determine third duration based on the first duration and the video analysis rate, wherein the third duration indicates duration required for completing analysis processing on all frame images in the candidate video; and determine the target analysis policy corresponding to the candidate video based on the third duration and the second duration.

13. An electronic device, comprising:

one or more processors and a memory, wherein
the memory is coupled to the one or more processors, the memory is configured to store computer program code, the computer program code comprises computer instructions, and the one or more processors invoke the computer instructions to enable the electronic device to perform the policy determining method for generating a video according to any one of claims 1 to 9.

**14.** A chip system, applied to an electronic device, wherein the chip system comprises one or more processors, and the processors are configured to invoke computer instructions to enable the electronic device to perform the policy determining method for generating a video according to any one of claims 1 to 9.

**15.** A computer-readable storage medium, storing a computer program, wherein the computer program, when executed by a processor, enables the processor to perform the policy determining method for generating a video according to any one of claims 1 to 9.

Electronic device 100

FIG. 1

APP layer

Service layer
| Multi-lens video recording and automatic clip formation | A plurality of short AI music clips | One-tap clip formation | Highlight moment |

Application function layer

Automatic editing framework
| Clip preference | Story line organization | Layout splicing | Special effect enhancement |

Basic function layer
| Video splicing | Synthesis and save | Video effect rendering | Audio effect processing |

Media middle platform framework layer

| Highlight clip analysis interface | Theme summary interface | Performance analysis and query interface |

| Policy monitoring interface | Pipeline interface |

FWK layer

| One-tap clip formation interface | Parameter management interface | Image data transmission interface |

| Theme analysis interface | Performance analysis interface |

HAL layer

| Highlight clip algrithm | Face detection algorithm | Video acceleration algorithm | Image super-resolution algorithm |

FIG. 2

9:00

Thursday, November 9

The sixteenth day of the tenth lunar month

Clock    Music    Gallery    Calculator

Camera    Address book    Phone    Messages

Camera    Address book    Phone    Messages

FIG. 3A

FIG. 3B

Discover

Photo, character, location, and the like

Ai
One-tap blockbuster

Editing

Freedom of creation

Microfilm creation

Puzzle

Community

Enter an image community and share beautiful moments

A1

Photo    Album    Moment    Discover

FIG. 3C

Photo

Photo, character, location, and the like

Start cloud photo synchronization

Gallery content will be automatically uploaded and stored in a cloud space, and you can access the gallery content on all your devices

Your gallery data synchronization service is provided by a third party

**No**          **Enable**

November 10, 2022

| | 00:15 | 00:20 | 00:22 |

| | 00:12 | 00:27 | 00:30 |

A2

Photo     Album     Moment     Discover

FIG. 3D

Photo

⋮

🔍 Photo, character, location, and the like

Start cloud photo synchronization

Gallery content will be automatically uploaded and stored in a cloud space, and you can access the gallery content on all your devices

Your gallery data synchronization service is provided by a third party

**No**        **Enable**

November 10, 2022

| 00:20 | 00:15 | 00:20 | 00:22 |
| 00:24 | 00:12 | 00:27 | 00:30 |

A2

Photo        Album        Moment        Discover

FIG. 3E

FIG. 3F

5G 5G 🛜  9:00

✕ All photos  ✓👆

| 👨‍👩‍👧 00:20 ✓ | 🐕 00:15 ✓ | 🏃 00:20 ✓ | 🚕 00:22 ○ |
| 🎤 00:24 ✓ | 🌳 00:12 ○ | 🌷 00:27 ○ | ⛺ 00:30 ✓ |

A3

More than six materials produce a better effect

| 👨‍👩‍👧 ✕ 00:20 | 🐕 ✕ 00:15 | 🏃 ✕ 00:20 | 🎤 ✕ 00:24 |

(a)

5G 5G 🛜  9:00

✕ All photos  ✓

| 👨‍👩‍👧 00:20 ✓ | 🐕 00:15 ✓ | 🏃 00:20 ✓ | 🚕 00:22 ○ |
| 🎤 00:24 ✓ | 🌳 00:12 ○ | 🌷 00:27 ○ | ⛺ 00:30 ✓ |

A3

More than six materials produce a better effect

Intellectually analyzing materials                    30% ✕

(b)

FIG. 4

FIG. 5

Photo

Q | Photo, character, location, and the like

Start cloud photo synchronization

Gallery content will be automatically uploaded and stored in a cloud space, and you can access the gallery content on all your devices

Your gallery data synchronization service is provided by a third party

**No**          **Enable**

November 10, 2022

| 00:20 | | 00:20 | 00:22 |
| 00:24 | 00:12 | | 00:30 |

A2

Photo      Album      Moment      Discover

FIG. 6A

FIG. 6B

FIG. 6C

FIG. 6D

| Perform an initialization operation in response to a first operation by a user, to obtain a video analysis rate | Step 100 |

| Perform analysis processing on to-be-selected videos based on the video analysis rate, to obtain analysis results of the to-be-selected videos | Step 200 |

| Generate a target video based on the analysis results of the plurality of to-be-selected videos | Step 300 |

FIG. 7

EP 4 543 028 A1

| Application layer | | | Media middle platform framework layer | | | | | FWK layer | HAL layer |
|---|---|---|---|---|---|---|---|---|---|
| Video editing service layer | Application function layer | Basic capability layer | Image highlight clip analysis interface | Theme summary interface | Performance analysis and query interface | Policy monitoring module | Channel interface | One-tap clip formation module | Algorithm module |

S101: Receives an operation of enabling a one-click clip formation function by a user

S102: Load and display a picture and a video

S103: Receive a video and a picture selected by the user and confirms to perform a one-click clip formation operation

S104: Invoke a media middle platform framework to initialize each interface

S105: Deliver initialization parameters (a highlight segment analysis algorithm and an initialization interface)

S106: Indicate initialization

S107: Perform initialization on the highlight clip analysis algorithm

S108: Initialization succeeds

S109: Invoke a chip analysis speed interface

S112: Initialization succeeds

S111: Chip analysis speed

S110: Return a chip analysis speed, such as 4

FIG. 8

| Application layer | | | Media middle platform framework layer | | | | | FWK layer | HAL layer |
|---|---|---|---|---|---|---|---|---|---|
| Video editing service layer | Application function layer | Basic capability layer | Image highlight clip analysis interface | Theme summary interface | Performance analysis and query interface | Policy monitoring module | Channel interface | One-tap clip formation module | Algorithm module |

S201: Query an analysis speed of a video 1 (where a parameter is a file descriptor fd1)

Continue to query an analysis speed of a next video

S202: Obtain a resolution and a rate of the video 1 based on the file descriptor fd1 of the video 1

S203: Calculate the analysis speed of the video 1 based on the resolution and a frame rate of the video 1, and a chip analysis speed

S204: Analysis speed of the video 1

S205: Calculate total target analysis duration based on returned analysis speeds of all videos

S206: Invoke the image highlight clip analysis interface to deliver the total target analysis duration and fd of all to-be-analyzed material files

S207: Indicate to analyze a picture 1

TO FIG. 9B

FIG. 9A

TO FIG. 9B

EP 4 543 028 A1

Analyze a picture first

Continue to analyze a next frame of picture

S208: Perform processing such as decoding, resolution reduction, and format conversion on the picture 1, and store the processed picture 1

S209: Send a frame data address of the picture 1

S210: Find the processed picture 1 based on the address, and obtain an analysis result (such as a score) after algorithm analysis is performed

S211: Return the analysis result of the picture 1

S212: Allocate analysis duration of each video based on expected time; and the expected time is a difference between the total target analysis duration and consumed picture analysis duration

EP 4 543 028 A1

S213: Dynamically set an analysis policy (full analysis, sparse analysis, intensive analysis, and IDR frame analysis)

Continue to analyze a next video

Analyze a video next

S214: Send the file descriptor of the video 1 and the set analysis policy

S215: Perform processing such as decoding, format conversion, and resolution reduction on the video 1, and store the processed video 1

S216: Send the frame data address of the video 1

S217: The algorithm module analyzes a position (a start time point and an end time point) of a highlight clip in the video 1

S218: Return an analysis result of the video 1 (including position information of the highlight clip)

S219: Invoke the image highlight clip analysis interface to notify a case that analysis of all material files is completed, and report an analysis result

FIG. 9C

EP 4 543 028 A1

Threshold 3    Threshold 2    Threshold 1

MIN ————————↑————————↑————↑———— MAX → Analysis duration Δt

I frame sampling    Sparse key clip    Intensive key clip    Full analysis
analysis policy     analysis policy    analysis policy       policy

FIG. 10

$T_{total}$

$T_{analysis}$    $T_{interval}$    $T_{analysis}$    $T_{interval}$    $T_{analysis}$    $T_{remaining}$

| Analysis clip N1 | | Analysis clip N2 | | Analysis clip N3 | ... | Final analysis clip Nn |

First frame of
a video

FIG. 11

$T_{short\ highlight}$

Minimum duration of a
highlight clip

$T_{long\ highlight}$

Maximum duration of the highlight
clip

$T_{minimum\ interval}$

Highlight clip

Highlight clip

$T_{expected\ analysis}$

Available analysis duration of an $i^{th}$ video

$T_{total}$

Total duration of the $i^{th}$ video

FIG. 12

Total duration of a video ($T_{total}$)
Available analysis duration ($T_{expected\ analysis}$)
Maximum duration of a highlight clip ($T_{long\ highlight}$)

$N_{upper\ limit} = \lceil (T_{total} - T_{expected\ analysis})/T_{minimum\ interval} + 1 \rceil$

$T_{lower\ limit} = T_{expected\ analysis}/N_{upper\ limit}$

$T_{long\ highlight} > T_{lower\ limit}$

No → $T_{analysis} = T_{lower\ limit}$

Yes → $T_{analysis} = T_{long\ highlight}$

**Highlight determining analysis duration ($T_{analysis}$)**

---

Total duration of a video ($T_{total}$)
Available analysis duration ($T_{expected\ analysis}$)
Maximum duration of the highlight clip ($T_{long\ highlight}$)
Analysis duration of the highlight clip ($T_{analysis}$)

$N_{analysis} = \lfloor T_{expected\ analysis}/T_{analysis} \rfloor$

$T_{short\ highlight} < T_{expected\ analysis} - N_{analysis} * T_{analysis}$

No → $N_{analysis} = N_{analysis}$

Yes → $N_{analysis} = N_{analysis} + 1$

**Quantity of analysis clips ($N_{analysis}$)**

---

Total duration of a video ($T_{total}$)
Available analysis duration ($T_{expected\ analysis}$)
Quantity of analysis clips ($N_{analysis}$)
Minimum interval ($T_{minimum\ interval}$) of highlight clips

$T_{interval} = (T_{total} - T_{expected\ analysis})/(N_{analysis} - 1)$

$T_{interval} < T_{minimum\ interval}$

No → $T_{interval} = T_{interval}$

Yes → $T_{interval} = T_{minimum\ interval}$

**Analysis clip interval duration ($T_{interval}$)**

---

**Three basic conditions for dividing a video file into N clips**

FIG. 13

EP 4 543 028 A1

FIG. 14

$$T_{total}$$

$$T_{analysis} \quad T_1 \quad T_{analysis} \quad T_2 \quad T_{analysis} \quad T_{final}$$

$$(2T_1)$$

| Analysis clip N1 | | Analysis clip N2 | | Analysis clip N3 | ... | Final analysis clip Nn |

First frame of a video, or an I frame at a 2$^{nd}$ second, or an I frame at a position of 1/5 of a video

FIG. 15

59

**(a)**

Analysis clip interval duration ($T_{interval}$)
Minimum interval ($T_{minimum\ interval}$) of highlight clips

$T_{interval}/4 > T_{minimum\ interval}$

No → $T1 = T_{minimum\ interval}$

Yes → $T1 = T_{interval}/4$

First interval duration $T_1$

**(b)**

$N_{analysis} = 3, 4,$ or $5$

$2*T_1 < T_{interval}$

No → $T_2 = T_{interval}$

Yes → $T_2 = 2*T_1$

Second interval duration $T_2$

**(c)**

$N_{analysis} = 4$ or $5$

$2*T_2 < T_{interval}$

No → $T_3 = T_{interval}$

Yes → $T_3 = 2*T_2$

Third interval duration $T_3$

**(d)**

$N_{analysis} = 5$

$2*T_3 < T_{interval}$

No → $T_4 = T_{interval}$

Yes → $T_4 = 2*T_3$

Fourth interval duration $T_4$

**(e)**

$N_{analysis} = 4$ or $5$

Place a last clip at the end of a video

FIG. 16

One frame image at a 2<sup>nd</sup> second

(a)

(b)

(c)

(d)

(e)

FIG. 17

Obtain first duration, second duration, and a video analysis rate · S1

Determine, based on the first duration, the second duration, and the video analysis rate, a target analysis policy corresponding to a candidate video · S2

FIG. 18

Total video duration (sum of all video duration): $L_A = L_1 + ... + L_n$

Duration of a video 1: $L_1$

Duration of a video n: $L_n$

Video 1

...

Video n

Sum of all video analysis speeds: $S_A = S_1 + ... + S_n$

Analysis speed of the video 1: $S_1$

...

Analysis speed of the video n: $S_n$

Total target analysis duration: $T_A$

Duration allocation algorithm

$T_1$

$T_n$

Analysis duration allocated to the video 1: $T_1$

...

Analysis duration allocated to the video n: $T_n$

FIG. 19

FIG. 20

Obtain first duration, second duration, and a video analysis rate — S401

Determine, based on the first duration, the second duration, and the video analysis rate, a target analysis policy corresponding to a candidate video from an analysis policy set — S402

Perform analysis processing on the candidate video based on the target analysis policy, to obtain an analysis result of the candidate video — S403

Obtain a target video based on the analysis result of the candidate video — S404

FIG. 21

Display a first interface, where the first interface includes a first control — S501

Display a second interface in response to a first operation on the first control — S502

Determine a candidate video in response to a second operation on the second interface — S503

Obtain first duration, second duration, and a video analysis rate — S504

Determine, based on the first duration, the second duration, and the video analysis rate, a target analysis policy corresponding to a candidate video from an analysis policy set — S505

Perform analysis processing on the candidate video based on the target analysis policy, to obtain an analysis result of the candidate video — S506

Obtain a target video based on the analysis result of the candidate video — S507

FIG. 22

900

901

Processor

instruction

903

902

Memory

Application
program

904

Communication unit

905

FIG. 23

## INTERNATIONAL SEARCH REPORT

| International application No. |
|---|
| **PCT/CN2023/116462** |

### A. CLASSIFICATION OF SUBJECT MATTER

H04N 21/8549(2011.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 视频, 片段, 分析, 生成, 处理, 识别, 解析, 提取, 时间, 时长, 长度, 速率, 速度, 能力, 算力, 策略, 模式, 方式, 跳帧, 抽帧, 重点, I帧, 剪辑, video, clip, generate, process, recognize, analysis, extract, time, length, rate, speed, capacity, computing, power, strategy, mode, jump, frame, step printing, key, I frame, edit

### C. DOCUMENTS CONSIDERED TO BE RELEVANT

| Category* | Citation of document, with indication, where appropriate, of the relevant passages | Relevant to claim No. |
|---|---|---|
| A | CN 114302100 A (ZHEJIANG UNIVIEW TECHNOLOGIES CO., LTD.) 08 April 2022 (2022-04-08)<br>  description, paragraphs [0005]-[0094] | 1-15 |
| A | CN 106791480 A (NUBIA TECHNOLOGY CO., LTD.) 31 May 2017 (2017-05-31)<br>  entire document | 1-15 |
| A | CN 107360476 A (SUZHOU KEDA TECHNOLOGY CO., LTD.) 17 November 2017 (2017-11-17)<br>  entire document | 1-15 |
| A | CN 110688952 A (BEIJING SENSETIME SCIENCE TECHNOLOGY DEVELOPMENT CO., LTD.) 14 January 2020 (2020-01-14)<br>  entire document | 1-15 |
| A | CN 111683296 A (SUZHOU KEDA TECHNOLOGY CO., LTD.) 18 September 2020 (2020-09-18)<br>  entire document | 1-15 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2023** | **22 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/116462**

### C.    DOCUMENTS CONSIDERED TO BE RELEVANT

| Category* | Citation of document, with indication, where appropriate, of the relevant passages | Relevant to claim No. |
|---|---|---|
| A | CN 113408461 A (SHENZHEN SIBO TECHNOLOGY CO., LTD.) 17 September 2021 (2021-09-17)<br>entire document | 1-15 |
| A | EP 3073743 A1 (FACEBOOK, INC.) 28 September 2016 (2016-09-28)<br>entire document | 1-15 |
| A | WO 2021190078 A1 (HUAWEI TECHNOLOGIES CO., LTD.) 30 September 2021 (2021-09-30)<br>entire document | 1-15 |
| A | US 2018089528 A1 (CANON K. K.) 29 March 2018 (2018-03-29)<br>entire document | 1-15 |

Form PCT/ISA/210 (second sheet) (July 2022)

| International application No. |
|---|
| **PCT/CN2023/116462** |

| Patent document cited in search report | | | Publication date (day/month/year) | Patent family member(s) | | | Publication date (day/month/year) |
|---|---|---|---|---|---|---|---|
| CN | 114302100 | A | 08 April 2022 | None | | | |
| CN | 106791480 | A | 31 May 2017 | None | | | |
| CN | 107360476 | A | 17 November 2017 | WO | 2019041661 | A1 | 07 March 2019 |
| | | | | CN | 107360476 | B | 20 September 2019 |
| CN | 110688952 | A | 14 January 2020 | CN | 110688952 | B | 12 April 2022 |
| CN | 111683296 | A | 18 September 2020 | CN | 111683296 | B | 02 August 2022 |
| CN | 113408461 | A | 17 September 2021 | CN | 113408461 | B | 01 July 2022 |
| EP | 3073743 | A1 | 28 September 2016 | EP | 3073743 | B1 | 06 May 2020 |
| | | | | US | 2016283796 | A1 | 29 September 2016 |
| | | | | WO | 2016153573 | A1 | 29 September 2016 |
| | | | | IN | 201747034255 | A | 06 October 2017 |
| | | | | AU | 2015387452 | A1 | 12 October 2017 |
| | | | | US | 9824279 | B2 | 21 November 2017 |
| | | | | KR | 20170130537 | A | 28 November 2017 |
| | | | | US | 2017357854 | A1 | 14 December 2017 |
| | | | | MX | 2017012245 | A1 | 09 January 2018 |
| | | | | CN | 107636677 | A | 26 January 2018 |
| | | | | JP | 2018514127 | W | 31 May 2018 |
| | | | | BR | 112017020479 | A2 | 10 July 2018 |
| | | | | US | 10248867 | B2 | 02 April 2019 |
| | | | | MX | 365586 | B | 07 June 2019 |
| | | | | US | 2019197317 | A1 | 27 June 2019 |
| | | | | US | 10860862 | B2 | 08 December 2020 |
| | | | | CA | 2979833 | A1 | 29 September 2016 |
| WO | 2021190078 | A1 | 30 September 2021 | CN | 113453040 | A | 28 September 2021 |
| | | | | CN | 113453040 | B | 10 March 2023 |
| US | 2018089528 | A1 | 29 March 2018 | JP | 2018056990 | A | 05 April 2018 |
| | | | | JP | 6550109 | B2 | 24 July 2019 |
| | | | | US | 10546208 | B2 | 28 January 2020 |
| | | | | AU | 2016231661 | A1 | 12 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211466668